# EUROPÄISCHE PATENTSCHRIFT

(11) **EP 3 129 310 B1**
(45) Veröffentlichungstag und Bekanntmachung des Hinweises auf die Patenterteilung: **31.01.2018**
(21) Anmeldenummer: 15741772.6
(22) Anmeldetag: 23.03.2015
(51) Int. Cl.: B65G 47/96, B65G 11/12

(54) **TRANSPORTELEMENT FÜR EINEN VERTEILFÖRDERER EINES SORTERS EINER SORTIERANLAGE**
TRANSPORTING ELEMENT FOR A DISTRIBUTING CONVEYOR OF A SORTER OF A SORTING INSTALLATION
ÉLÉMENT DE TRANSPORT DESTINÉ À UN CONVOYEUR DISTRIBUTEUR D'UNE TRIEUSE D'UNE INSTALLATION DE TRI

(30) Priorität: 08.04.2014 DE 102014206740
(43) Veröffentlichungstag der Anmeldung: 15.02.2017
(73) Patentinhaber: Siemens Aktiengesellschaft, 80333 München (DE)
(72) Erfinder: BERDELLE-HILGE, Peter, 78464 Konstanz (DE)
(74) Vertreter: Maier, Daniel Oliver
(86) Internationale Anmeldenummer: PCT/EP2015/056084
(87) Internationale Veröffentlichungsnummer: WO 2015/154976

(56) Entgegenhaltungen:
- EP-A2- 0 556 159
- WO-A1-95/23750
- WO-A2-95/34492
- DE-C1- 4 447 396
- FR-A1- 2 885 123
- JP-U- S4 862 775

## Beschreibung

Die Erfindung betrifft ein Transportelement für einen Verteilförderer eines Sorters einer Sortieranlage eines Sortiersystems.

Sortiersysteme identifizieren in ungeordneter Reihenfolge ankommendes Stückgut, beispielsweise Pakete (in Postämtern), Gepäckstücke (auf Flughäfen) oder Kommissionsware (in Versandhäusern), aufgrund vorgegebener Unterscheidungskriterien und verteilen sie auf festgelegte Ziele.

Solche Sortiersysteme bestehen aus Sortieranlagen, die mit entsprechenden organisatorischen Abläufen und angepassten Betriebsstrategien, welche in zugehörigen Steuerungen bei den Sortieranlagen bzw. Sortiersystemen implementiert sind, die Systemfunktionalität der Sortiersysteme gewährleisten.

Die Sortieranlage stellt dabei den technischen Teil des Sortiersystems dar und besteht aus einem oder mehreren Sortern, welcher bzw. welche die Verteilung des Stückgutes auf die Ziele realisiert bzw. realisieren, sowie vor- und nachgeschalteten Funktionsbereichen, wie Zu- und Abförderungen des Stückgutes.

Ein solcher Sorter selbst besteht aus einer Einschleusung, einem Verteilförderer und End-/Zielstellen für das zu verteilende Stückgut.

Sorter erreichen je nach Stückgutgewicht Sortierleistungen von Stückgut bis über 15.000 Stück/h. Übliche Maximalgewichte von Stückgut liegen bei ca. 20 kg bis 60 kg, bei einzelnen Sortiersystemen auch bis zu 150 kg.

Durch parallel oder matrixartig verbundene Sorter bei Sortieranlagen können Sortiersysteme auch Sortierleistungen bis über 200.000 Stück/h erreichen.

Wachsenden und/oder wechselnden Anforderungen an Sortiersysteme, wie insbesondere hohe Sortierleistungen und/oder unterschiedliches Stückgut, stehen vielfältige Bauformen der Verteilförderer gegenüber.

Bei technikorientierter Klassifizierung von Verteilförderer nach den Kriterien Belegungsart, Wirkprinzip einer Ausschleusung des Stückgutes und fördertechnisches Prinzip können insbesondere Verteilförderer mit einer Quergurttechnologie und einer Kippschalentechnologie, kurz Quergurtförderer und Kippschalenförderer, unterschieden werden.

Ein Quergurtförderer ist aus http://de.wikipedia.org/wiki/Quergurtsorter (erhältlich am 03.04.2014) bekannt.

Ein Fördermittel bei dem Quergurtförderer besteht aus einzelnen gelenkig zu einer geschlossenen Kette verbundenen Transportelementen, hier Fahrwagen, die über ein Führungssystem - längs einer Streckenführung bzw. in einer dadurch definierten Transportrichtung/Förderrichtung - mit Geschwindigkeiten bis zu 3,5 m/s bewegt werden.

Die Streckenführung erfolgt raumgängig, zumeist horizontal.

Ein Antrieb der Fahrwagenkette bzw. der Transportelementekette erfolgt über Kettenantriebe, Reibradantriebe und zunehmend über Linearmotorantriebe.

Als Stückgutaufnahme und Ausschleusemechanismus befinden sich auf den Fahrwagen bzw. Transportelementen orthogonal zur Transport/Förderrichtung installierte Gurtförderer.

Das auf Gurten der Gurtförderer liegende Stückgut kann so an der Ausschleusungsposition beidseitig aktiv in die Endstelle gefördert werden (Ausschleusung).

Eine Antriebsenergie der Gurte wird mechanisch oder elektrisch über Schleifleitungen und zunehmend berührungslos übertragen.

Ein Kippschalenförderer ist aus http://de.wikipedia.org/wiki/Kippschalensorter (erhältlich am 03.04.2014) bekannt.

Das Fördermittel bei dem Kippschalenförderer ist weitestgehend mit dem des Quergurtförderers identisch und besteht auch hier aus den einzelnen gelenkig zu einer geschlossenen Kette verbundenen Transportelementen bzw. Fahrwagen, die - auch hier - über das Führungssystem - längs der Streckenführung bzw. in der dadurch definierten Transportrichtung/Förderrichtung - bewegt werden.

Als Gutauflage und Ausschleusemechanismus werden bei den Kippschalenförderern mechanisch oder elektrisch kippbare Transportflächen, hier sogenannte (Trag-)Schalen in Form von weitgehend planen, unberandeten Tragplatten, auf den Fahrwagen/Transportelementen installiert.

An der jeweiligen Ziel- bzw. Ausschleusungsstelle wird dann die (Trag-)Schale/-platte - aus ihrer in der Regel horizontalen (Horizontale) bzw. Streckenführung-parallelen Grundstellung bzw. Förderstellung ("aufgerichtete Grundstellung") - in eine schräge Kippstellung gekippt ("seitliches Kippen/Neigen um eine Achse in Förderrichtung"), was - durch Aufbringen einer schwerkraftbedingten Hangabtriebskraft auf das zu sortierende Stückgut durch das seitliche Kippen/Neigen - ein seitliches Abgleiten/Abrutschen des zu sortierenden Stückgutes aus der Tragschale bzw. von deren gekippten Tragschalen-/Plattenfläche an der vorgesehenen Zielstelle auslöst/bewirkt (Ausschleusung).

Anschließend, d.h. nach Ausschleusung des zu sortierenden Stückgutes von dem betreffenden Fahrwagen/Transportelement bzw. nach Passieren der Zielstelle von dem betreffenden Fahrwagen/Transportelement, wird die gekippte Tragschale wieder in ihre horizontale Förderstellung/aufgerichtete Grundstellung bzw. in die Horizontale gebracht.

Die Kippbewegung ist zweidimensional oder dreidimensional. Eine Kippkinematik beeinflusst eine Bewegungsbahn des Stückguts beim Abrutschen und hierdurch die minimale Endstellenbreite.

Ein Liniendurchsatz von Sortieranlagen ist ein entscheidender Parameter (für die Sortierleistung) für eine topologische Komplexität des gesamten Sortiersystems. Eine Erhöhung des Liniendurchsatzes - für eine erhöhte Sortierleistung - ist deshalb anzustreben.

Höherer Liniendurchsatz ist zum Beispiel durch eine dichtere Belegung des Fördermittels mit zu sortierendem Stückgut erreichbar.

Dieses kann durch eine dichtere Packung des Stückgutes in Längsrichtung sowie Aufnehmen mehrer Güter in Querrichtung erfolgen.

Eine diesbezügliche technische Realisierung ist aber insbesondere bei den Verteilförderern, wie den Quergurt- und den Kippschalenförderern, schwierig, technisch komplex und kostenintensiv.

So ist es auch bekannt, neben der Einfachanordnung bei Quergurtförderern auch zwei Quergurtförderer übereinander (Doppelstockquergurtförderer) oder nebeneinander (Parallelquergurtförderer) an einem Fahrwagen/Transportelement zu installieren, um so den Liniendurchsatz und die Sortierleistung zu erhöhen. Entsprechende Doppel- bzw. Parallelsysteme sind auch bei Kippschalenförderern bekannt, wo auch dort so der Liniendurchsatz und die Sortierleistung erhöhbar sind.

Die technische Lösung dieser Doppel- bzw. Parallelsysteme bei den Quergurt- bzw. Kippschalenförderern ist aufwändig, erfordert sie doch meist mitgeförderte elektrische Aktoren auf jedem Transportelement/Fahrwagen, komplex und/oder kostenintensiv. WO 95/34492 beschreibt ein Transportelement nach dem Oberbegriff des Anspruchs 1. Der Erfindung liegt die Aufgabe zugrunde, die Nachteile im Stand der Technik zu verbessern, insbesondere Sortieranlagen mit Sortern bzw. Verteilförderern vorzusehen, mit welchen ein erhöhter Liniendurchsatz und eine erhöhte Sortierleistung bei zu sortierendem Stückgut realisierbar ist.

Auch liegt der Erfindung die Aufgabe zugrunde, einen Verteilförderer eines Sorters bei einer Sortieranlage eines Sortiersystems vorzusehen, welcher einfach und kostengünstig realisierbar ist und welcher ein zuverlässiges Ausschleusen von Stückgut vom Fördermittel des Verteilförderers ermöglicht.

Die Aufgabe wird durch ein Transportelement für einen Verteilförderer eines Sorters einer Sortieranlage eines Sortiersystems mit den Merkmalen gemäß dem unabhängigen Patentanspruch gelöst.

Dieses Transportelement weist mindestens eine erste, beidseitig um eine Achse ("Kippachse") in einer Transportrichtung des Transportelements schwenkbare (bzw. kippbare) Transportfläche zur Aufnahme mindestens eines zu sortierenden Stückgutes, wie beispielsweise ein Postgut, wie einen Brief und/oder ein Paket, ein Gepäckstück oder eine Kommissionsware, auf.

Ist die erfindungsgemäße mindestens eine erste, beidseitig schwenkbare (bzw. kippbare) Transportfläche in einer gekippten Position (beispielsweise beim Ent-/Beladen wie auch beim Transport), unterliegt ein auf der mindestens einen ersten, beidseitig schwenkbaren Transportfläche angeordnetes (beim Transport) bzw. anzuordnendes (beim Ent-/Beladen) Stückgut einer "ständigen" bzw. "immerwährenden" schwerkraft- bzw. gewichtskraftbedingten Hangabtriebskraft, welche eine diesbezügliche Bewegung, beispielsweise ein Abrutschen des auf der mindestens einen ersten, beidseitig schwenkbaren Transportfläche angeordneten Stückguts, bewirken bzw. auslösen könnte bzw. auslöst.

Weiter weist dieses Transportelement mindestens eine zweite, um eine Achse ("Neigungsachse") in der Transportrichtung des Transportelements geneigte Transportfläche zur Aufnahme mindestens eines zu sortierenden Stückgutes auf.

Ist die erfindungsgemäße mindestens eine zweite, geneigte Transportfläche derart geneigt, unterliegt ein auf der mindestens einen zweiten, geneigten Transportfläche angeordnetes Stückgut einer "ständigen" bzw. "immerwährenden" schwerkraft- bzw. gewichtskraftbedingten Hangabtriebskraft, welche eine diesbezügliche Bewegung, beispielsweise ein Abrutschen des auf der mindestens einen zweiten, geneigten Transportfläche angeordneten Stückguts, bewirken bzw. auslösen könnte (vgl. mindestens eine erste, beidseitig schwenkbare Transportfläche in der gekippten Position).

Die mindestens eine erste, beidseitig schwenkbare Transportfläche ist dabei oberhalb der mindestens einen zweiten, geschwenkten Transportfläche angeordnet.

Dabei kann unter beidseitig schwenkbar (bei der mindestens einen ersten, beidseitig schwenkbaren Transportfläche) gemeint werden, dass diese aus einer horizontalen Lage (Horizontale) in zwei entgegen gesetzte Schwenkrichtungen um die horizontale Lage (Horizontale) schwenk-/kippbar (Wippe), beispielsweise mittels einer Manipulationsvorrichtung, wie eines Aktors, beispielsweise mittels eines elektromechanischen Antriebs, ist.

Mit den zwei entgegen gesetzten Schwenkrichtungen kann gemeint sein, dass die entsprechenden (die zwei Schwenkrichtungen mathematisch im Raum definierenden) zwei Schwenkrichtungsvektoren, entgegengesetzt zueinander gerichtet sind. (Anders bzw.) Anschaulich ausgedrückt, die zwei Schwenkachsen, um die die mindestens eine erste, beidseitig schwenkbare Transportfläche entgegen gesetzt (gegensinnig) in den beiden Schwenkbewegungen geschwenkt/gekippt werden kann, fallen entweder zusammen (eine gemeinsame Schwenkachse für beide Schwenkrichtungen) oder sind (zumindest) parallel zueinander (für jede Schwenkrichtung existiert jeweils eine Schwenkachse, welche beiden Schwenkachsen (dann zumindest) parallel zueinander sind). Erfindungsgemäß wird unter geneigt (bei der mindestens einen zweiten, geneigten Transportfläche) gemeint, dass die mindestens eine zweite, geneigte Transportfläche statisch auf einen vorgebaren Neigungswinkel eingestellt ist (statische Transportfläche). Unbeschadet dessen kann mindestens eine zweite, geneigte Transportfläche in ihrer Neigung verstellbar, beispielsweise mittels einer Manipulationsvorrichtung/eines Aktors, wie eines elektromechanischen Antriebs, sein.

Oberhalb angeordnet (bei der mindestens einen ersten, beidseitig schwenkbaren und der mindestens einen zweiten, geneigten Transportfläche) meint, dass sich die mindestens eine erste, beidseitig schwenkbare Transportfläche, zumindest wenn sich diese in der horizontalen Lage befindet, oberhalb der mindestens einen zweiten, geneigten Transportfläche befindet. (Vereinfacht bzw.) Anschaulich ausgedrückt, befindet sich die die mindestens eine erste, beidseitig schwenkbare Transportfläche in der horizontalen Lage, so befindet sich der (vertikal) höchste Punkt der mindestens einen zweiten, geneigten Transportfläche unterhalb (oder zumindest auf gleicher (vertikaler) Höhe) der mindestens einen ersten, beidseitig schwenkbaren Transportfläche.

Diese diesbezüglich vorgesehene Anordnung der mindestens einen ersten, beidseitig schwenkbaren Transportfläche (als beidseitig schwenkbare Transportfläche) und der mindestens einen zweiten, geneigten Transportfläche (als (zumindest) geneigte Transportfläche) bzw. der mindestens einen ersten, beidseitig schwenkbaren Transportfläche (oberhalb) zu/bezüglich der mindestens einen zweiten, geneigten Transportfläche ermöglichen/-t, dass
- zum einen der Schwerkrafteinfluss - je nach Kipplage der mindestens einen ersten, beidseitig schwenkbaren Transportfläche - auf ein dort zu transportierendes Transportstücks eine Bewegung in zwei unterschiedlichen Richtungen auslösen kann, wodurch eine Manipulation/Bewegung von dem zu sortierenden Transport-/Stückgut bei einem Be- und einem Entladen immer mit unterstützendem/positiven Schwerkrafteinfluss erfolgen kann,
- sowie zum andern (und in Kombination damit) - da die mindestens eine erste, beidseitig schwenkbare Transportfläche oberhalb der mindestens einen zweiten, geneigten Transportfläche angeordnet ist - diese schwerkraftausgelöste Manipulation/Bewegung für ein Zusammenspiel/- wirken von der mindestens einen ersten, beidseitig schwenkbaren Transportfläche mit der mindestens einen zweiten, geneigten Transportfläche, insbesondere für eine Übergabe eines zu transportierenden Transportstücks von der mindestens einen ersten, beidseitig schwenkbaren Transportfläche an die mindestens eine zweite, geneigten Transportfläche, nutzbar ist.
(Vereinfacht bzw.) Anschaulich ausgedrückt, die beidseitige Schwenkbarkeit der mindestens einen ersten, beidseitig schwenkbaren Transportfläche sowie bzw. in Kombination mit deren ("oberhalbigen") Anordnung zur mindestens einen zweiten, (zumindest auch) geneigten Transportfläche (und dadurch mögliche Positionierung/Ausrichtung der beiden Transportflächen zueinander) ermöglicht ein "schwerkraftunterstütztes" (ohne negativen Schwerkrafteinfluss, d.h. ohne eines der Be-/Entladerichtung entgegenwirkenden Schwerkraftanteils) (nahezu beliebiges) beidseitiges, paralleles Be-/Entladen von Transportgütern bei dem (bzw. von einem (einzigen)) Transportelement sowie ein (nahezu beliebiges) (internes) - ggf. auch mehrmaliges - "Umpositionieren/-laden" (auch Vorsortieren) von geladenen Transportgütern bei dem Transportelement.

Dadurch lassen sich die Transportflächen "optimal" bzw. effizient für eine Beladung mit Stückgütern nutzen sowie die Be- und/oder Entladungsvorgänge sowie die Transportvorgänge "optimiert" bzw. effizient (und so auch im Weiteren das gesamte "Anlagendesign" "optimiert" bzw. effizient) gestalten.

Der Liniendurchsatz und die Sortierleistung des Verteilförderers bzw. des Sorters mit einem solchen Transportelement wird erhöht; gleichzeitig verringern sich durchsatzbezogene Linienkosten in erheblichem Maße; auch ist das Transportelement - und so der Verteilförderer bzw. der Sorter - einfach und kostengünstig realisierbar und ermöglicht dabei auch ein zuverlässiges Ausschleusen von Stückgut vom Fördermittel des Verteilförderers.

Ist so auch die mindestens eine erste, beidseitig schwenkbare Transportfläche oberhalb der mindestens einen zweiten, geneigten Transportfläche angeordnet, wobei damit in oberer Ebene ent- und beladen und in unterer Ebene (nur) entladen werden kann, lässt sich durch die damit verbundene Verlagerung eines Beladens/einer Beladefunktion "in die Höhe" eine Stellfläche einer Sortieranlage verkleinern. So kann hier auch gleichzeitig oben Be- und unten Entladen bzw. gleichzeitig oben und unten Entladen werden.

Des Weiteren zeigt das Transportelement, insbesondere durch deren mindestens eine erste, beidseitig schwenkbare Transportfläche, und dessen dort realisierbare Wechselmöglichkeit der Entladeseite, eine sehr geringe Schieflastabhängigkeit, was die kinematischen Einflüsse auf das Transportelement verringert. Die Einsatzflexibilität des Transportelements bzw. der Sorters/Verteilförderers wird erhöht.

Durch Kippen der mindestens einen ersten, beidseitig schwenkbaren Transportfläche vor dem Entladen kann die Losbrechkraft des Transportgutes auf seiner Transportfläche reduziert und dadurch dessen Entladung (unter positiven Schwerkrafteinfluss bzw. ohne negativen Schwerkrafteinfluss) einfach, zuverlässig und gezielt steuerbar realisiert werden.

Darüber hinaus kann ein solches Transportelement bzw. können die Transportelemente auch bei/mit heutigen Beladungsstationen für Crossbelt-Sorters verwendet werden.

Auch können die Entlade-Beschleunigung und die Entladegeschwindigkeit bei dem Transportelement größer sein, als bei heutigen Crossbelt-Sortern.

Ferner lässt sich bei bzw. mit dem Transportelement auch eine gemeinsame Sorterplattform für die Verwendung unterschiedlicher Gutspektren, ggf. bis hin zu Gepäckstücken, realisieren.

Weiter kann die Beladung des Transportelements aufgrund dessen vorgesehen Ausgestaltung auch im Entladebereich einer Verteilförders bzw. der Anlage erfolgen. Die mit einer Erhöhung des Durchsatzes einhergehende notwendige proportionale erhöhte Anzahl von Beladestellen führt damit nicht zwangsläufig zu einer Vergrößerung der Anlage. Die Beladestellen können über den gesamten Streckenverlauf verteilt werden. Dadurch ist eine weitere, hier topologisch begründete Durchsatzerhöhung (um maximal den Faktor 2) möglich.

Aufgrund des - mit dem Transportelement realisierbaren - hohen Durchsatzpotentials kann der realisierte Durchsatz bei dem Verteilförderer bzw. der Anlage kleiner als der maximal mögliche gewählt werden, um andere (kritische) Systemparameter (des Transportelements bzw. bei dem Verteilförderer/der Anlage) reduzieren zu können, z.B. die Reduktion der Transportgeschwindigkeit der Transportelements, was so auch weniger Energieverbrauch, Verschleiß, Geräusch und ein besseres Abwurfverhalten bei dem Transportelement bedeutet.

Bevorzugte Weiterbildungen der Erfindung ergeben sich auch aus den abhängigen Ansprüchen und/oder aus nachfolgenden Erläuterungen. Insbesondere Weiterbildungen bei der mindestens einen ersten, beidseitig schwenkbaren Transportfläche oder der mindestens zweiten, geneigten Transportfläche können sich auch auf die jeweils andere (d.h. mindestens zweite, geneigte bzw. mindestens erste, beidseitig schwenkbare) Transportfläche beziehen.

### Weiterbildungen der mindestens einen ersten, beidseitig schwenkbaren Transportfläche

Bevorzugt kann vorgesehen sein, dass ein realisierbarer (maximaler) (beidseitiger) Kippwinkel (um die Horizontale) bei der mindestens einen ersten, beidseitig schwenkbaren Transportfläche im Bereich von ca. +/- 60°, besonders bevorzugt im Bereich von ca. +/- 45°, liegt. Auch kann der realisierbare (maximale) (beidseitige) Kippwinkel der mindestens einen ersten, beidseitig schwenkbaren Transportfläche an einen Neigungswinkel der mindestens einen zweiten, geneigten Transportfläche angepasst bzw. in dessen Abhängigkeit gewählt sein.

Die Kippbewegung der mindestens einen ersten, beidseitig schwenkbaren Transportfläche lässt sich bevorzugt mittels einer entsprechenden Manipulationsvorrichtung bzw. eines entsprechenden Aktors, wie eines elektromechanischen Antriebs, realisieren.

Auch kann vorgesehen sein, dass die mindestens eine erste, beidseitig schwenkbare Transportfläche durch Schwenkung in eine Schwenkposition derart zu der mindestens einen zweiten, geneigten Transportfläche positionierbar ist, dass ein zu transportierendes Stückgut von der mindestens einen ersten, beidseitig schwenkbaren Transportfläche - zumindest unter Schwerkrafteinfluss - an die mindestens eine zweite, geschwenkte Transportfläche übergebbar ist.

Dabei kann (durch entsprechende/bei entsprechender Positionierung der mindestens einen ersten, beidseitig schwenkbaren Transportfläche zu der mindestens einen zweiten, geneigten Transportfläche (Winkel, Ausrichtung, Positionierung)) "übergebbar" meinen, dass sich das zu transportierende Stückgut unter Schwerkrafteinfluss, insbesondere ohne zusätzliche "Fremdmanipulation" durch einen Aktor, von der mindestens einen ersten, beidseitig schwenkbaren Transportfläche zu der/auf die mindestens eine zweite, geneigte Transportfläche bewegt, beispielsweise durch ein Abrutschen des zu transportierenden Stückguts von der mindestens einen ersten, beidseitig schwenkbaren Transportfläche auf die mindestens eine zweite, geneigte Transportfläche.

Hierzu, d.h. zu der Übergabe, kann beispielsweise der Kippwinkel der mindestens einen ersten, beidseitig schwenkbaren Transportfläche annähernd gleich oder steiler dem Neigungswinkel der mindestens zweiten, geneigten Transportfläche sein. Auch können hierzu die mindestens erste, beidseitig schwenkbare Transportfläche und die mindestens zweite, geneigte Transportfläche derart zueinander ausgerichtet und/oder positioniert sein, dass deren Flächen annähernd in Verlängerung sind.

Zu einer Unterstützung dieser Stückgutübergabe zwischen der mindestens einen ersten, beidseitig schwenkbaren Transportfläche zu der/an die mindestens eine zweite, geneigte Transportfläche können aber auch unterstützende (aktive und/oder passive) Aktoren, wie Fördermittel, an der mindestens einen ersten, beidseitig schwenkbaren Transportfläche - und/oder an der mindestens einen zweiten, geneigten Transportfläche - vorgesehen sein.

Weiter kann die mindestens eine erste, beidseitig schwenkbare Transportfläche mindestens eine Rückhaltevorrichtung aufweisen, mittels welcher ein auf der beidseitig schwenkbaren (bzw. in einer geschwenkten/gekippten Position der) Transportfläche aufgenommenes, zu sortierendes Stückgut gegen das - kippungsbedingt schwerkraftbedingte/-unterstützte bzw. hangabtriebskraftbedingte - Abrutschen auf der gekippten, mindestens einen ersten, beidseitig schwenkbaren Transportfläche zurückhaltbar ist.

So kann beispielsweise eine solche Rückhaltevorrichtung ein Rückhalteelement sein, welches insbesondere durch Form- und/oder Kraft- und/oder Reibschluss mit dem auf der gekippten, mindestens einen ersten, beidseitig schwenkbaren Transportfläche abzurutschenden, zu sortierenden Stückgut dieses gegen das Abrutschen auf dieser zurückhält.

Vereinfacht ausgedrückt, die mindestens eine Rückhaltevorrichtung gewährleistet eine Rückhaltefunktion, beispielsweise durch den Form- und/oder Kraft- und/oder Reibschluss, für das auf der gekippten, mindestens einen ersten, beidseitig schwenkbaren Transportfläche abzurutschende, zu sortierende Stückgut, um dieses gegen das Abrutschen auf dieser zurückzuhalten.

Die mindestens eine Rückhaltevorrichtung, beispielsweise das Rückhalteelement, kann weiter so manipulierbar sein, beispielsweise schalt-, verschieb- und/oder versenkbar, dass das auf der mindestens einen ersten, beidseitig schwenkbaren Transportfläche aufgenommene, zu sortierende Stückgut zu dem - kippgungsbedingt schwerkraftbedingten bzw. hangabtriebskraftbedingten - Abrutschen auf der gekippten, mindestens einen ersten, beidseitig schwenkbaren Transportfläche freigebbar ist.

Auch kann die mindestens eine Rückhaltevorrichtung ein pneumatisches oder elektrostatisches Rückhaltelement sein, mittels welches - durch entsprechende Betätigung/"Manipulation" deselben - Normalkräfte auf das Stückgut erzeugbar bzw. diese reduzierbar sind, dass das auf der mindestens einen ersten, beidseitig schwenkbaren Transportfläche aufgenommene, zu sortierende Stückgut zu dem - kippgungsbedingt schwerkraftbedingten bzw. hangabtriebskraftbedingten - Abrutschen auf der gekippten, mindestens einen ersten, beidseitig schwenkbaren Transportfläche freigebbar ist.

Das auf der Transportfläche aufgenommene, zu sortierende Stückgut kann so auf der gekippten, mindestens einen ersten, beidseitig schwenkbaren Transportfläche abzurutschen beginnen; die Ausschleusung des zu sortierenden Stückguts vom Transportelement kann - zeitlich und/oder örtlich gezielt und gewünscht - eingeleitet bzw. ausgelöst werden.

Anschaulich und vereinfacht ausgedrückt, bei Manipulation der mindestens einen Rückhaltevorrichtung wird dessen Rückhaltefunktion aufgehoben, beispielsweise durch Lösen des Form- und/oder Kraftschlusses, und so das auf der mindestens einen ersten, beidseitig schwenkbaren Transportfläche aufgenommene, zu sortierende Stückgut zu dem - kippungsbedingt schwerkraftbedingten bzw. hangabtriebskraftbedingten - Abrutschen auf der gekippten, mindestens einen ersten, beidseitig schwenkbaren Transportfläche freigegeben.

Entsprechend ist auch die mindestens eine Rückhaltevorrichtung, beispielsweise das Rückhalteelement, weiter so manipulierbar, beispielsweise schalt-, verschieb- und/oder versenkbar, dass ein auf der mindestens einen ersten, beidseitig schwenkbaren Transportfläche aufzunehmendes, zu sortierendes Stückgut (Beladung) - durch die Rückhaltevorrichtung - ungehindert (bei entsprechender Kippung der mindestens einen ersten, beidseitig schwenkbaren Transportfläche unter dem positiven Schwerkrafteinfluss) ungehindert aufgeladen, insbesondere ungehindert "aufrutschen", kann.

Eine solche manipulierbare Rückhaltevorrichtung bzw. ein solches manipulierbare Rückhalteelement kann beispielsweise eine schalt-/(weg-/um-)klappbare Klappe sein.

Besonders bevorzugt ist für eine solche manipulierbare Rückhaltevorrichtung eine versenkbare Leiste, eine nach unten versenkbare Klappe, eine Falltür o.ä., benötigt ein derartiges Rückhalteelement keinen "störenden" Bewegungsbereich.

Insbesondere kann sich eine solche manipulierbare Rückhaltevorrichtung bzw. ein solches manipulierbare Rückhalteelement parallel zur Kippachse auf der mindestens einen ersten, beidseitig schwenkbaren Transportfläche erstrecken ("waagrechte Ausrichtung"). Weiter kann es sich dabei auch über die gesamte diesbezügliche ("waagrechte") Erstreckung der mindestens einen ersten, beidseitig schwenkbaren Transportfläche erstrecken ("waagrecht über die gesamte Transportflächenbreite"), lassen sich so mehrere, insbesondere kleine Transportgüter auf der mindestens einen ersten, beidseitig schwenkbaren Transportfläche transportieren und gleichzeitig ausschleusen.

Auch kann eine solche manipulierbare, mindestens eine Rückhaltevorrichtung bzw. ein solches Rückhalteelement (zumindest in Ausschleuserichtung) elastisch ausgebildet sein, um eine Belastung auf ein zu sortierendes Stückgut zu reduzieren (Vermeidung von "harten" Anschlagkräften).

Die Manipulation einer solchen manipulierbaren, mindestens einen Rückhaltevorrichtung bzw. eines solches Rückhalteelements kann durch einen Einsatz eines Motors und entsprechend vieler Reibkupplungen zur Kraftkopplung mit einzelnen Stellgliedern aktiviert werden.

Ferner kann weiter vorgesehen sein, dass die mindestens eine erste, beidseitig schwenkbare Transportfläche mehrere von den manipulierbaren, mindestens einen Rückhaltevorrichtungen/- elementen aufweist. Eine entsprechende Positionierung kann sich aus der Art und/oder Größe der zu transportierenden Stückgüter und des Transportelements bzw. der mindestens einen ersten, beidseitig schwenkbaren Transportfläche ergeben.

Bevorzugt weist die mindestens eine erste, beidseitig schwenkbare Transportfläche zumindest drei manipulierbare Rückhaltevorrichtungen/-elemente auf, deren zwei sich an den beiden seitlichen Rändern (d.h. am Rand zur Entlade-/Beladeseite hin und am entgegen gesetzten Rand) der mindestens einen ersten, beidseitig schwenkbaren Transportfläche befinden ("Randrückhalteelement" bzw. "äußeres Rückhalteelement" (am Rand zur Entlade-/Beladeseite) und inneres Rückhalteelement" (am entgegen gesetzten Rand); die dritte manipulierbare Rückhaltevorrichtung/-element kann in etwa der Mitte der mindestens einen ersten, beidseitig schwenkbaren Transportfläche angeordnet sein ("Mittelrückhalteelement"). Das Mittelrückhalteelement ist dabei besonders bevorzugt als versenkbare Leiste, die Randrückhalteelemente sind jeweils als schwenkbare Klappen ausgeführt.

Durch eine bzw. durch seitliche Wangen (d.h. zur/entgegen der Transportrichtung) an der mindestens einen ersten, beidseitig schwenkbaren Transportfläche können auch nicht eigensteife Stückgüter prozesssicher transportiert und/oder entladen werden.

Weiterhin kann bei der Realisierung der beidseitigen Kippbewegung der mindestens einen ersten, beidseitig schwenkbaren Transportfläche eine gemeinsame Kippachse (für beide Schwenkrichtungen) vorgesehen sein. Diese gemeinsame Kippachse kann derart positioniert sein, dass die mindestens eine erste, beidseitig schwenkbare Transportfläche in zwei annähernd gleich große Teilflächen teilt (Mittelachse).

Auch kann vorgesehen sein, dass die Kippachse bzw. die Kippachsen nicht ortsfest ist bzw. sind, sondern - realisierbar mittels einer entsprechenden Mechanik - während der Schwenk-/Kippbewegung wandert bzw. wandern (Momentanpolkurve).

Überdies können - zur Steigerung der Effizient des Transportelements bzw. des Liniendurchsatzes bei dem Transportelement bzw. dem Verteilförderer/Sorter - zwei von solchen "mindestens" einen ersten, beidseitig schwenkbaren Transportflächen vorgesehen sein. Besonders bevorzugt können diese zwei ersten, beidseitig schwenkbaren Transportflächen in der Transportrichtung nebeneinander bei dem Transportelement angeordnet sein.

Eine besonders einfache, effiziente und kostengünstige Anordnung der zwei ersten, beidseitig schwenkbaren Transportflächen bei dem Transportelement ergibt sich, wenn diese in etwa der gleichen (vertikalen) Höhe (und so beide oberhalb der mindestens einen zweiten, geneigten Transportfläche), symmetrisch nebeneinander (bei dem Transportelement) angeordnet sind.

Die mindestens eine erste, beidseitig schwenkbare und/oder die mindestens eine zweite, geneigte Transportfläche können/kann dabei (jeweils) in Teilbereichen oder weitestgehend eben bzw. plan oder als Freifläche ausgebildet sein.

### Weiterbildungen der mindestens einen zweiten, geneigten Transportfläche

Weiter kann auch die mindestens eine zweite, geneigte Transportfläche eine Neigung gegen eine Vertikale oder gegen eine Normale zu einer Streckenführungsebene des Transportelements von ca. 30° bis 75°, insbesondere von ca. 60° bis 70°, im Speziellen auch von ca. 65°, einnehmen.

Auch kann die mindestens eine zweite, geneigte Transportfläche mindestens eine Rückhaltevorrichtung aufweisen (vgl. entsprechende Rückhaltevorrichtungen an der mindestens einen ersten, beidseitig schwenkbaren Transportfläche), mittels welcher ein auf der mindestens einen zweiten, geneigten Transportfläche aufgenommenes, zu sortierendes Stückgut gegen das - neigungsbedingt schwerkraftbedingte bzw. hangabtriebskraftbedingte - Abrutschen auf dieser zurückhaltbar ist.

So kann beispielsweise eine solche Rückhaltevorrichtung ein Rückhalteelement sein, welches insbesondere durch Form- und/oder Kraftschluss mit dem auf der mindestens einen zweiten, geneigten Transportfläche abzurutschenden, zu sortierenden Stückgut dieses gegen das Abrutschen auf dieser zurückhält.

Vereinfacht ausgedrückt, die mindestens eine Rückhaltevorrichtung gewährleistet eine Rückhaltefunktion, beispielsweise durch den Form- und/oder Kraftschluss, für das auf der mindestens, einen zweiten, geneigten Transportfläche abzurutschende, zu sortierende Stückgut, um dieses gegen das Abrutschen auf dieser zurückzuhalten.

Die mindestens eine Rückhaltevorrichtung, beispielsweise das Rückhalteelement, kann weiter so manipulierbar sein, beispielsweise schalt-, verschieb- und/oder versenkbar, dass das auf der mindestens einen zweiten, geneigten Transportfläche aufgenommene, zu sortierende Stückgut zu dem - neigungsbedingt schwerkraftbedingten bzw. hangabtriebskraftbedingten - Abrutschen auf dieser freigebbar ist.

Anschaulich und vereinfacht ausgedrückt, bei Manipulation der mindestens einen Rückhaltevorrichtung wird dessen Rückhaltefunktion aufgehoben, beispielsweise durch Lösen des Form- und/oder Kraftschlusses, und so das auf der mindestens einen zweiten, geneigten Transportfläche aufgenommene, zu sortierende Stückgut zu dem - neigungsbedingt schwerkraftbedingten bzw. hangabtriebskraftbedingten - Abrutschen auf dieser freigegeben.

Eine solche manipulierbare Rückhaltevorrichtung bzw. ein solches manipulierbares Rückhalteelement kann beispielsweise eine schalt-/(weg-/um-)klappbare Klappe, eine versenk-/verschiebbare Leiste o.ä. sein.

Insbesondere kann es sich parallel zur Neigungsachse auf der mindestens einen zweiten, geneigten Transportfläche erstrecken ("waagrechte Ausrichtung"). Weiter kann es sich dabei auch über die gesamte diesbezügliche ("waagrechte") Erstreckung der mindestens einen zweiten, geneigten Transportfläche erstrecken ("waagrecht über die gesamte Transportflächenbreite").

Ist die manipulierbare, mindestens eine Rückhaltevorrichtung bzw. das Rückhalteelement als Klappe ausgeführt, kann diese zusätzlich auch eine Rutschenfunktion übernehmen.

Auch kann eine solche manipulierbare, mindestens eine Rückhaltevorrichtung bzw. ein solches Rückhalteelement (zumindest in Ausschleuserichtung) elastisch ausgebildet sein, um eine Belastung auf ein zu sortierendes Stückgut zu reduzieren (Vermeidung von "harten" Anschlagkräften).

Vereinfacht und anschaulich ausgedrückt, an bzw. auf der mindestens einen zweiten, geneigten Transportfläche des Transportelements kann mindestens eine manipulierbare Rückhaltevorrichtung bzw. ein manipulierbares Rückhalteelement angeordnet sein, beispielsweise eine schalt-/(weg-/um-)klappbare Klappe, eine versenk-/verschiebbare Leiste o.ä., welche/-s ein auf der mindestens einen zweiten, geneigten Transportfläche aufgenommenes, zu sortierendes Stückgut gegen das neigungsbedingt schwerkraftbedingte bzw. hangabtriebskraftbedingte Abrutschen auf dieser, insbesondere durch Form- und/oder Kraftschluss, zurückhält.

Kurz bzw. einfach ausgedrückt, das auf der mindesten einen zweiten, geneigten Transportfläche aufgenommene, zu sortierende Stückgut kann sich gegen das mindestens eine Rückhalteelement, insbesondere form- und/oder kraftschlüssig, abstützen. Ein unerwünschtes bzw. vorzeitiges Abrutschen eines zu sortierenden Stückguts (außerhalb der jeweiligen Ziel-/Ausschleusungsstelle) wird verhindert.

Wird die mindestens eine Rückhaltevorrichtung dann - entsprechend seiner Funktionalität - manipuliert, beispielsweise das Rückhaltelement geschaltet, versenkt und/oder verschoben, wird das auf der mindestens einen zweiten, geneigten Transportfläche aufgenommene, zu sortierende Stückgut zu dem - neigungsbedingt schwerkraftbedingten bzw. hangabtriebskraftbedingten - Abrutschen auf dieser freigegeben.

Das auf der Transportfläche aufgenommene, zu sortierende Stückgut kann so auf der mindestens einen zweiten, geneigten Transportfläche abzurutschen beginnen; die Ausschleusung des zu sortierenden Stückguts vom Transportelement kann - zeitlich und/oder örtlich gezielt und gewünscht - eingeleitet bzw. ausgelöst werden.

Wegen der hier "bereits (schon beim Transport eines zu sortierenden Stückguts auf der mindestens einen zweiten, geneigt Transportfläche des Transportelements) vorhandenen/eingenommenen" und nicht nur bei der Ausschleusung temporär ausgeführten Kippung einer Transportfläche, wie entsprechend bei der mindestens einen ersten, beidseitig schwenkbaren Transportfläche oder bei einer nur bei der Ausschleusung zu kippenden (Trag-)Schale bei einem Kippschalenförderer, wirkt so hier "ständig" bzw. "immerwährend" die schwerkraft- bzw. gewichtskraftbedingte Hangabtriebskraft auf das auf der mindestens einen zweiten, geneigten Transportfläche angeordnete Stückgut.

Ein auf der mindestens einen zweiten, geneigten Transportfläche angeordnetes Stückgut ist so "immer" für die Ausschleusung bereit bzw. "konditioniert".

Demzufolge ist so auch die manipulierbare (und das auf der mindestens einen zweiten, geneigten Transportfläche aufgenommene, zu sortierende Stückgut abstützende) Rückhaltevorrichtung erforderlich, um eine vorzeitige bzw. unerwünschte Ausschleusung des Stückguts (von dieser) zu verhindern.

"Nur" im Falle einer gewünschten Ausschleusung des auf der mindestens einen zweiten, geneigten Transportfläche aufgenommenen, zu sortierenden Stückguts kann dann die mindestens eine Rückhaltvorrichtung entsprechend ihrer Funktion manipuliert und damit das auf der mindestens einen zweiten, geneigten Transportfläche aufgenommene, zu sortierende Stückgut freigegeben werden, was dann die Ausschleusung des auf der mindestens einen zweiten, geneigten Transportfläche aufgenommenen, zu sortierenden, entsprechend "immer konditionierten" Stückguts auslöst.

Die Manipulation der mindestens einen auf der mindestens einen zweiten, geneigten Transportfläche angeordneten Rückhaltevorrichtung bzw. des Rückhalteelements kann bevorzugt "von außen" erfolgen, d.h. durch einen nicht an dem Transportelement angeordneten bzw. mit diesem mitbewegten Aktor, beispielsweise durch einen feststehenden und ein Stellglied für die mindestens eine Rückhaltevorrichtung antreibenden Aktor. Das Transportelement kann so diesbezüglich passiv ausgebildet und damit kostengünstig sein. Auch kann hierdurch die Ausschleusungssicherheit erhöht werden.

Auch kann die mindestens eine Rückhaltevorrichtung bzw. das Rückhalteelement an der mindestens einen zweiten, geneigten Transportfläche mit einem vorgebbaren Abstand oberhalb von einer unteren bzw. äußeren Kante/Rand der mindestens einen zweiten Transportfläche auf/an dieser angeordnet sein. Einem auszuschleusenden, d.h. einem auf der mindestens einen zweiten, geneigten Transportfläche abrutschenden Stückgut kann so bereits eine signifikante Geschwindigkeit aufgeprägt werden, wenn sich eine Vorderkante des auszuschleusenden bzw. abrutschenden Stückguts über die untere Kante der mindestens einen zweiten, geneigten Transportfläche hinweg bewegt.

Werden zwei oder mehrere von der mindestens einen, manipulierbaren Rückhaltevorrichtung bzw. dem Rückhalteelement an der mindestens einen zweiten, geneigten Transportfläche, insbesondere jeweils waagrecht über die gesamte Breite der mindestens einen zweiten, geneigten Transportfläche, angeordnet, so lassen sich hierdurch zwei oder mehrere Stückgüter "verarbeiten", d.h. auf der mindestens einen zweiten, geneigten Transportfläche fördern und zeitlich hintereinander sicher und zuverlässig ausschleusen.

Eine Belastung auf ein Stückgut beim Beladen der mindestens einen zweiten, geneigten Transportfläche mit einem Stückgut kann auch reduziert werden, wenn die mindestens eine zweite, geneigte Transportfläche schaltbare Reibelemente aufweist.

Ungeachtet der ansonsten festangestellten bzw. statischen, mindestens einen zweiten, geneigten Transportfläche kann darüber hinaus auch deren Schwenken/Neigen (um die Neigungsachse) vorgesehenen sein.

So kann zur (vorteilhaften) Unterstützung des Ausschleusens eines auf der mindestens einen zweiten, geneigten Transportfläche angeordneten Stückgutes, die mindestens eine zweite, geneigte Transportfläche mit Beginn des Ausschleusens selbst nach unten geschwenkt werden, um einen Losbrechvorgang in das Abrutschen/Gleiten des auszuschleusenden Stückgutes zu unterstützen.

Weiter kann hier auch vorgesehen sein, die mindestens eine zweite, geneigte Transportfläche gänzlich nach unten in die Senkrechte abzuklappen, so dass das auszuschleusende Stückgut in diesem Fall nach unten ausgeschleust wird.

Zu einer Unterstützung des Beladens bzw. des Einschleusens bei dem Transportelement, kann - weil vorteilhaft - die mindestens eine zweite, geneigte Transportfläche in dieser bzw. für diese (Belade-)Phase mehr oder ganz in eine horizontale Position gebracht bzw. geschwenkt werden. Anschließend bzw. nach erfolgter Beladung der mindestens einen zweiten, geneigten Transportfläche kann diese (wieder), insbesondere langsam, geneigt bzw. geschwenkt werden.

Diese Schwenkbewegungen der mindestens einen zweiten, geneigten Transportfläche (beim Beladen und/oder Ausschleusen) lassen sich mittels einer entsprechenden Manipulationsvorrichtung realisieren. Konstruktiv einfach lassen sich diese mittels eines Kurvengetriebes "von außen" einleiten.

Auch können bei dem mindestens einen zweiten, geneigten Transportelement entsprechend Wangen und/oder äußere Rückhalteelemente, wie die beim mindestens einen ersten, beidseitig schwenkbaren Transportelement, vorgesehen sein.

### Weiterbildungen bei "Doppelstock-Wipp-Transportelement"

Nach einer besonders bevorzugten Weiterbildung weist das Transportelement zwei von den mindestens einen ersten, beidseitig schwenkbaren und zwei von den mindestens einen zweiten, geneigten Transportflächen auf.

Vereinfacht und anschaulich ausgedrückt, das Transportelement besitzt zwei Transportebenen (untere und obere Transportebene) für zu transportierende Stückgüter, wobei in der oberen Ebene die zwei ersten, beidseitig schwenkbaren Transportflächen (in Transportrichtung links und rechts bzw. auf der linken und rechten Seite) und in der unteren Ebene die zwei zweiten, geneigten Transportebenen (in Transportrichtung links und rechts bzw. auf der linken und rechten Seite) angeordnet sind (zwei obere Wippen sowie zwei untere statische Transportflächen).

Durch die zwei unteren, zweiten geneigten Transportflächen wird erreicht, dass Stückgüter von der oberen, z.B. rechten, Seite auf die linke Seite parallel zu den Stückgütern auf der oberen linken, ersten, beidseitig schwenkbaren Transportfläche entladen werden können.

Die für eine solche Schieflast herzustellende Entladesequenz muss sich somit nur auf zwei Stückgüter und nicht auf vier Stückgüter beziehen, was keine sinnvolle Durchsatzerhöhung mehr ermöglichen würde.

Weiter kann auch vorgesehen sein, dass bei den zwei, ersten, beidseitig schwenkbaren und den zwei, zweiten, geneigten Transportflächen jeweils eines von den äußeren Rückhalteelementen (so insgesamt vier äußere Rückhalteelemente) und/oder dass bei den zwei, ersten, beidseitig schwenkbaren Transportflächen jeweils eines von den inneren Rückhalteelementen (so insgesamt zwei innere Rückhalteelemente) vorgesehen sind.

Dabei kann hier weiter vorgesehen sein, dass die vier äußeren Rückhaltelemente an einer Stelle vor dem Beladebereich über ein ortsfestes Kurvengetriebe gegen eine Federkraft geschlossen werden. An den vielen Entladepositionen braucht so dann nur eine Entriegelung des den Verschluss bewirkenden Stellgliedes, beispielsweise mittels eines Entriegelungsaktors, vorgesehen sein.

Wäre dieser Entriegelungsaktor Teil des Transportelementes, könnte der Entladezeitpunkt stückgut-/sendungsabhängig gewählt werden zur Reduktion der Gefahr von Fehlsortierungen.

Allerdings könnte dann zwischen Beladebereichen jeweils nur ein einziges Stückgut pro Seite entladen werden und somit die Transportfähigkeit von mehreren Stückgütern/Sendungen auf dem Transportelement für eine Seite nicht genutzt werden.

Das Öffnen des jeweils inneren Rückhalteelementes der zwei ersten, beidseitig schwenkbaren Transportflächen könnte (ebenfalls gegen eine Federkraft) durch die Schwenkbewegung der zwei ersten, beidseitig schwenkbaren Transportflächen selbst erfolgen, was dann allerdings einen entsprechenden längeren Rutschweg für ein möglicher Weise zweites Stückgut (auf der jeweiligen ersten, beidseitig schwenkbaren Transportfläche) bedeuten würde.

Bevorzugt sind die zwei ersten, beidseitig schwenkbaren Transportflächen und/oder die zwei zweiten, geneigten Transportflächen jeweils symmetrisch zueinander bei dem Transportelement angeordnet.

Nach einer besonders bevorzugten Weiterbildung sind die zwei zweiten, geneigten Transportflächen jeweils um den gleichen Winkel (gleicher Winkelbetrag) um die Neigungsachse - aber - gegeneinander geneigt. Anders ausgedrückt, die zwei zweiten, geneigten Transportflächen sind um den gleichen Winkelbetrag, aber mit unterschiedlichem Vorzeichen um ihre jeweilige Neigungsachse geneigt.

Die zwei zweiten, gegeneinander geneigten Transportflächen können dabei an einer "gemeinsamen" Kante sich aneinander anschließen.

Vereinfacht und anschaulich dargestellt, solche zwei zweiten, gegeneinander geneigten Transportflächen bilden ein bzw. einen Teil eines "Dreiecksprismas" aus.

Dabei kann das Dreiecksprisma an der "gemeinsamen Kante" auch gekappt sein, was Vorteile für eine Einschleusungsanordnung/Einschussanordnung haben kann. Auch kann an der "gemeinsamen Kante" eine, insbesondere horizontale, Anschlagfläche vorgesehen sein (vgl. inneres Rückhalteelement), was das Einschleusen eines Stückguts "von der Seite" erleichtert.

Hierdurch, d.h. durch das Transportelement mit zwei solchen zweiten, gegeneinander geneigten Transportflächen, kann der Sortierdurchsatz einer diesbezüglichen Sortieranlage erhöht werden. Auch ist ein gleichzeitiges Beladen der zwei zweiten, gegeneinander geneigten Transportflächen eines solchen Transportelements an einer Position (Einschleusungsstelle) mit zwei Beladestationen möglich.

### Weiterbildung zur Gesamtanlage/Verteilförderer

Auch kann vorgesehen sein, dass ein erfindungsgemäßes Transportelement an ein Transportmittel, beispielsweise ein Zugmittel, wie eine Kette, und/oder ein autonomes Fahrzeug, angekoppelt bzw. mit diesem verbunden ist.

So kann beispielsweise weiter vorgesehen sein, bei einem Verteilförderer eines Sorters einer Sortieranlage mehrere von den erfindungsgemäßen Transportelementen gelenkig miteinander, insbesondere zu einer Endloskette, zu verbinden. Die Endloskette wird so alle Ausschleusungsstellen bei der Sortieranlage überstreichen können.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Die Erfindung ist jedoch nicht auf die in den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Funktions-/bauartgleiche bzw. identische Elemente oder Komponenten weisen in den Ausführungsbeispielen gleiche Bezugszeichen auf.

Es zeigen:
- FIG 1: ein Transportelement für einen Verteilförderer eines Sorters einer Sortieranlage gemäß einem Ausführungsbeispiel (Prinzip),
- FIG 2: ein Transportelement für einen Verteilförderer eines Sorters einer Sortieranlage beim Beladen gemäß einem Ausführungsbeispiel (Prinzip),
- FIG 3: ein Transportelement für einen Verteilförderer eines Sorters einer Sortieranlage beim Beladen (internes Umlagern beim Beladen) gemäß einem Ausführungsbeispiel (Prinzip),
- FIG 4: ein Transportelement für einen Verteilförderer eines Sorters einer Sortieranlage beim Beladen (internes Umlagern beim Beladen) gemäß einem Ausführungsbeispiel (Prinzip),
- FIG 5: ein Transportelement für einen Verteilförderer eines Sorters einer Sortieranlage beim Transport gemäß einem Ausführungsbeispiel (Prinzip),
- FIG 6: ein Transportelement für einen Verteilförderer eines Sorters einer Sortieranlage beim Entladen gemäß einem Ausführungsbeispiel (Prinzip),
- FIG 7: ein Transportelement für einen Verteilförderer eines Sorters einer Sortieranlage gemäß einem weiteren Ausführungsbeispiel,
- FIG 8: ein Transportelement für einen Verteilförderer eines Sorters einer Sortieranlage gemäß einem weiteren Ausführungsbeispiel und
- FIG 9: ein Transportelement für einen Verteilförderer eines Sorters einer Sortieranlage gemäß einem weiteren Ausführungsbeispiel.

### Aufbau Transportelement 1/"Doppelstockwagen"

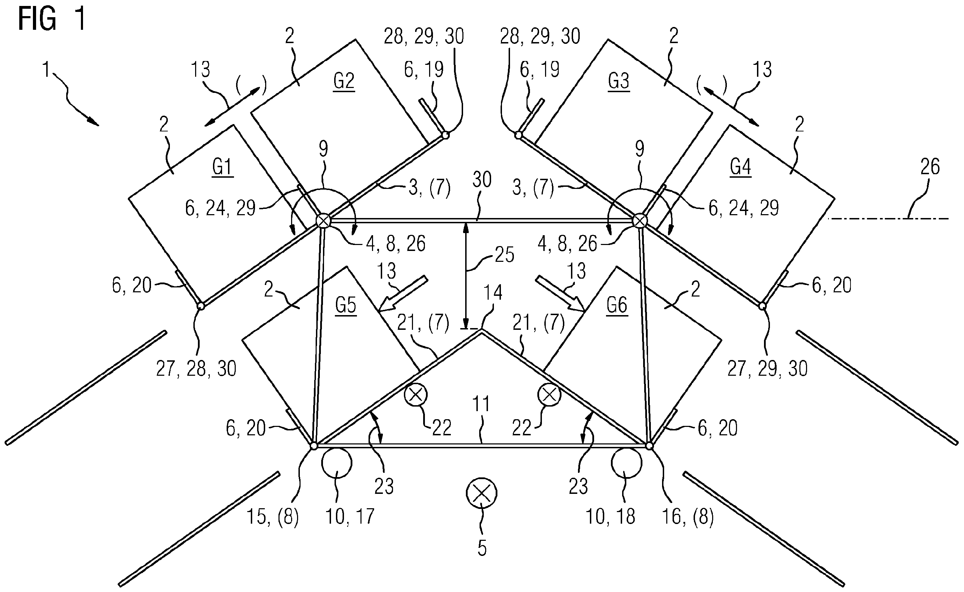

FIG 1 zeigt ein Transportelement 1 für einen Verteilförderer eines Sorters einer Sortieranlage eines Sortiersystems zum Sortieren von Stückgut 2, wie beispielsweise Paketstücke.

Bei diesem Verteilförderer sind mehrere solcher Transportelemente 1 nach FIG 1 über eine (Zug-)Kette (nicht dargestellt) gelenkig miteinander verbunden und laufen - in Transportrichtung 5 gezogen über die Kette - geführt auf Längsschienen 17, 18 eines Schienensystems 10.

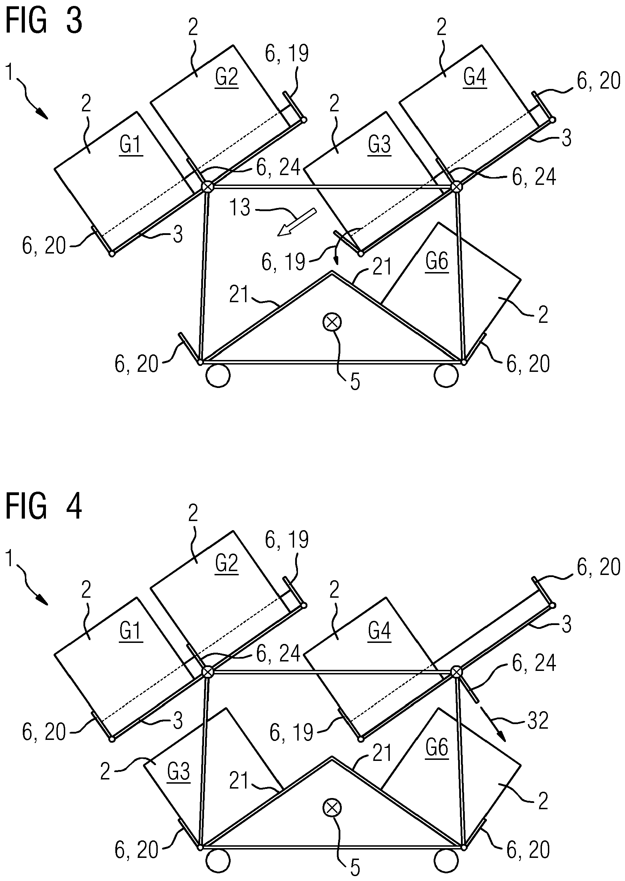

FIG 1 zeigt - exemplarisch - das Transportelement 1 in einem (hier mit sechs Stückgütern: Gut 1 (G1), Gut 2 (G2), Gut 3 (G3), Gut 4 (G4), Gut 5 (G5), Gut 6 (G6)) beladenen Zustand während seines Transports zu einer Ausschleusungs- bzw. Zielstelle (vgl. auch FIG 4).

Das Transportelement 1 - in seiner Form ähnlich eines "symmetrischen Doppelstockwagens" - weist (als Rahmengestell ausgebildet 30) in seiner "unteren" Ebene - in seiner Form ähnlich eines "(symmetrischen) Dreieckprismas" - zwei gegeneinander jeweils um den gleichen Winkel 23 (gleicher Winkelbetrag), in diesem Fall ca. 35°, um eine in der Transportrichtung 5 verlaufende Kippachse 22 geneigte/gekippte, feststehende (statische) Transportflächen 21 (untere bzw. zweite, geneigte bzw. Transportflächen 21) zur Aufnahme des zu sortierenden Stückguts 2 auf.

Die beiden festen und um den Winkel 23 geneigten unteren Transportflächen 21 berühren sich dabei entlang einer - die "Höhe" des "Dreiecksprismas" bildenden - gemeinsamen Kante 14. Geschlossen wird das "Dreiecksprisma" durch eine Bodenfläche/-platte 11, an deren entlang der Transportrichtung 5 bzw. in Längsschienenrichtung verlaufenden Kanten 15, 16 die beiden unteren Transportflächen 3 angeordnet sind.

Jede der beiden geneigten unteren Transportflächen 3 eines solchen Transportelements 1 weist ein als (Längs-)Klappe 6 ausgebildetes, um-/wegklappbares äußeres Rückhalteelement 6, 20 auf, welches jeweils an der unteren Kante einer jeweiligen unteren Transportfläche 21 (untere Klappe) angeordnet sind.

Die Klappen bzw. äußeren Rückhalteelemente 6 bzw. 20 bei den unteren Transportflächen 21 sind horizontal ausgerichtet und erstrecken sich über die gesamte Breite 7 der jeweiligen unteren Transportfläche 21.

(Nicht dargestellte) feststehende Aktoren treiben von "außen" (ebenfalls nicht dargestellte) Stellglieder an, welche die Klappen/äußeren Rückhalteelemente 6 bzw. 20 schalten bzw. manipulieren.

Jede dieser Klappen/äußeren Rückhaltelemente 6 bzw. 20 an den unteren geneigten Transportflächen 21 sichern so (im "hochgeklappten" Zustand) ein Stückgut 2 (hier Gut 5 und Gut 6) gegen ein Hangabtriebskraft bedingtes Abrutschen 13 (in Abrutschrichtung 13) - form- und kraftschlüssig - auf der jeweiligen unteren geneigten Transportfläche 21 ab.

Oberhalb 13 der zwei unteren geneigten Transportflächen 21 sind bei dem Transportelement 1 - in seiner oberen Ebene - (ebenfalls symmetrisch und in gleicher vertikaler Höhe 26 zueinander) zwei beidseitig, schwenkbare Transportflächen 3 (obere bzw. erste, beidseitig schwenkbare Transportflächen 3) bzw. (obere) Wippen 3, d.h. eine (in der Transportrichtung 5 linke und rechte Wippe 3) angeordnet.

Die zwei oberen bzw. beidseitig schwenkbaren Transportflächen/Wippen 3 sind jeweils mittels eines elektromechanischen Aktors 8 um ihre jeweilige Kippachse 4 in einem Winkelbereich von ca. +/- 60° beidseitig kipp-/schwenkbar, wobei die jeweilige Kippachse 4 in etwa die jeweilige obere bzw. beidseitig schwenkbare Transportflächen/Wippe 3 in zwei annähernd gleiche Teilflächen teilt.

Jede der beiden oberen bzw. beidseitig schwenkbaren Transportflächen/Wippen 3 des Transportelements 1 weist jeweils ein als (Längs-)Klappe 6 ausgebildetes, um-/wegklappbares äußeres Rückhalteelement 6, 20 sowie ein (ebenfalls) als (Längs-)Klappe 6 ausgebildetes, um-/wegklappbares inneres Rückhalteelement 6, 19 auf, welche jeweils an der äußeren 27 bzw. inneren Kante 28 einer jeweiligen oberen bzw. beidseitig schwenkbaren Transportfläche/Wippe 3 angeordnet sind.

Diese Klappen bzw. äußeren und inneren Rückhalteelemente 6 bzw. 20/19 bei den beiden oberen bzw. beidseitig schwenkbaren Transportflächen/Wippen 3 sind (wie auch die Klappen 6 bei den unteren geneigten Transportflächen 21) horizontal ausgerichtet und erstrecken sich über die gesamte Breite 7 der jeweiligen oberen bzw. beidseitig schwenkbaren Transportfläche/Wippe 3.

Aktoren 29 treiben Stellglieder 30 an, welche die Klappen/äußeren bzw. inneren Rückhalteelemente 6 bzw. 20/19 bei den beiden oberen bzw. beidseitig schwenkbaren Transportflächen/Wippen 3 schalten bzw. manipulieren.

Jede dieser Klappen/äußeren bzw. inneren Rückhaltelemente 6 bzw. 20/19 an den beiden oberen bzw. beidseitig schwenkbaren Transportflächen/Wippen 3 sichern so (im "hochgeklappten" Zustand) ein Stückgut 2 (hier Gut 1 und Gut 2 bzw. Gut 3 und Gut 4) gegen ein Hangabtriebskraft bedingtes Abrutschen 13 (in Abrutschrichtung 13) - form- und kraftschlüssig - auf der jeweiligen oberen bzw. beidseitig schwenkbaren Transportfläche/Wippe 3 in deren gekippten Zustand ab.

Des Weiteren weist jede der oberen bzw. beidseitig schwenkbaren Transportflächen/Wippen 3 jeweils eine mittels eines Aktors 29 "nach unten versenkbare (wegtauchbare)" Mittelleiste 6 bzw. 24 auf, welche im Bereich der Mitte bzw. der Kippachse 4 an der jeweiligen oberen bzw. beidseitig schwenkbaren Transportfläche/Wippe 3 angeordnet sind.

Diese Mittelleisten 24 bei den beiden oberen bzw. beidseitig schwenkbaren Transportflächen/Wippen 3 sind (wie auch die Klappen 6 bei den unteren geneigten Transportflächen 21) horizontal ausgerichtet und erstrecken sich über die gesamte Breite 7 der jeweiligen oberen bzw. beidseitig schwenkbaren Transportfläche/Wippe 3.

Jede dieser Mittelleisten 24 an den beiden oberen bzw. beidseitig schwenkbaren Transportflächen/Wippen 3 teilt so die jeweilige oberen bzw. beidseitig schwenkbaren Transportfläche/Wippe 3 in zwei Transportplätze (innerer und äußerer Transportplatz) für zwei zu transportierende Stückgüter 2 und sichert so (im "hochgefahrenen" Zustand) ein Stückgut 2 (hier Gut 2 bzw. Gut 3) gegen ein Hangabtriebskraft bedingtes Um- bzw. "Hin-und Her"-Rutschen 13 (in Abrutschrichtung 13) - form- und kraftschlüssig - auf der jeweiligen oberen bzw. beidseitig schwenkbaren Transportfläche/Wippe 3 in deren gekippten Zustand ab.

### Beladen/Umladen, Transport und Entladen des Transportelements 1/"Doppelstockwagens" (FIGen 2 bis 6)

### - Beladen/Einschleusen und Umladen/-lagern (FIGen 2 bis 4)

Zeigt FIG 1 das mit sechs Stückgütern 2 beladene Transportelement 1 während des Transports zu einer Ausschleusungs- bzw. Zielstelle (vgl. auch FIG 4), so verdeutlichen FIGen 2 bis 4 das Beladen einschließlich des internen Umlagerns von Stückgütern innerhalb der Transportflächen 3 und 21 des Transportelements 1.

Die Beladung des Transportelements 3 an der Einschleusungs- bzw. Beladestelle erfolgt beidseitig des Transportelements und ausschließlich über die obere Ebene des Transportelements 1 bzw. dessen zwei obere, beidseitig schwenkbare Transportflächen 3 bzw. Wippen 3.

Befindet sich das - zunächst noch unbeladene - Transportelement 1 an der Einschleusungs- bzw. Beladestelle, befinden sich zunächst die zwei oberen beidseitig schwenkbaren Transportflächen 3 bzw. Wippen 3 in horizontaler oder leicht (ca. 10°) nach innen gekippter (angedeutet) Position.

Die zwei äußeren Rückhalteelemente 20 an den zwei oberen beidseitig schwenkbaren Transportflächen 3 bzw. Wippen 3 sind weggeklappt, wohingegen die zwei äußeren Rückhalteelemente 20 an den zwei unteren geneigten Transportflächen 21 hochgeklappt sind. Die zwei Mittelleisten 24 an den zwei oberen beidseitig schwenkbaren Transportflächen 3 bzw. Wippen 3 sind "nach unten" Weggefahren 32. Die zwei inneren Rückhalteelemente 19 an den zwei oberen beidseitig schwenkbaren Transportflächen 3 bzw. Wippen 3 sind ebenfalls hochgeklappt.

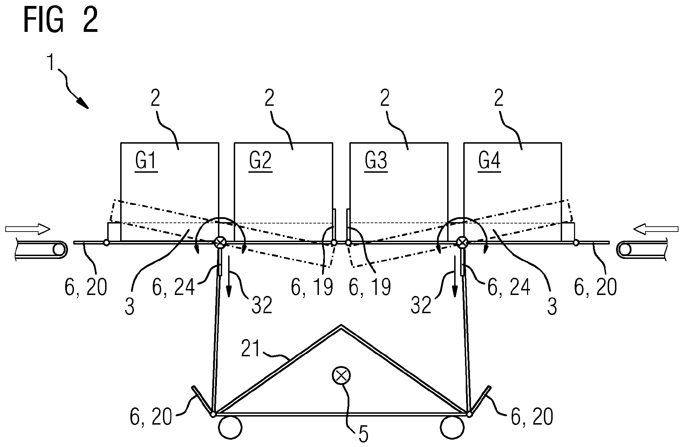

Wie FIG 2 verdeutlicht, werden zunächst die zwei "inneren" Stückgüter 2, d.h. Gut 2 und Gut 3, (beidseitig des Transportelements 1) auf die jeweilige obere rechte bzw. linke beidseitig schwenkbare Transportfläche 3 bzw. Wippe 3 aufgeschoben bzw. rutschen - bei nach innen gekippter Position der oberen rechten bzw. linken beidseitig schwenkbaren Transportfläche 3 bzw. Wippe 3 - Hangabtriebskraft bedingt/Hangabtriebskraft unterstützt - auf die jeweilige obere rechte bzw. linke beidseitig schwenkbare Transportfläche 3 bzw. Wippe 3 bis zum Anschlag an das jeweilige (hochgeklappte) innere Rückhalteelement 19 auf.

Ist das Transportelement 1 so mit diesen beiden "inneren" Stückgütern 2 (Gut 2 und Gut 3) beladen, werden die zwei Mittelleisten 24 der zwei oberen beidseitig schwenkbaren Transportflächen 3 bzw. Wippen 3 nach oben gefahren - und können so die beiden "inneren" Stückgüter 2 (Gut 2 und Gut 3) (bei gegengekippter Position der Wippen 3 (vgl. Umlagern und Transport)) gegen ein Zurückrutschen absichern.

Weiter werden dann die äußeren Stückgüter 2 (Gut 1 und Gut 4) auf die jeweilige obere rechte bzw. linke beidseitig schwenkbare Transportfläche 3 bzw. Wippe 3 aufgeschoben bzw. rutschen - bei nach innen gekippter Position der oberen rechte und linken beidseitig schwenkbaren Transportfläche 3 bzw. Wippe 3 - Hangabtriebskraft bedingt/Hangabtriebskraft unterstützt - auf die jeweilige obere rechte bzw. linke beidseitig schwenkbare Transportfläche 3 bzw. Wippe 3 bis zum Anschlag an die jeweilige (hochgefahrene) Mittelleiste 24 auf (Vermeidung von Aufrutschen).

FIG 3 (und FIG 4) verdeutlicht(/-en) nun das interne Umlagern (der "inneren") Stückgüter 2, d.h. Gut 2 und Gut 3, von der oberen Ebene des Transportelements 2 bzw. der zwei oberen beidseitig schwenkbaren Transportflächen 3 bzw. Wippen 3 auf die zwei unteren geneigten Transportflächen 21.

Dazu wird, wie FIG 3 zeigt, eine der beiden oberen beidseitig schwenkbaren Transportflächen 3 bzw. Wippen 3 (hier am Beispiel der rechten oberen beidseitig schwenkbaren Transportfläche 3 bzw. Wippe 3) nach innen gekippt, bis deren Kippwinkel/Winkellage der entsprechenden unteren geneigten Transportfläche 21 (auf der jeweils "anderen" Seite des Transportelements 1) entspricht und deren Transportflächen 3 und 21 sich in etwa in Verlängerung befinden.

Wie FIG 3 weiter verdeutlicht, wird nun das innere Rückhaltelement 19 der oberen, rechten beidseitig schwenkbaren Transportfläche 3 bzw. Wippe 3 weggeklappt, wodurch das innere Stückgut, d.h. Gut 3, - Hangabtriebskraft bedingt/Hangabtriebskraft unterstützt - (von der oberen, rechten beidseitig schwenkbaren Transportfläche 3 bzw. Wippe 3) auf die untere linke geneigte Transportfläche 21 - bis zum dortigen hochgeklappten äußeren Rückhalteelement 20 aufrutscht (vgl. FIG 4). Dabei übernimmt das innere Rückhalteelement 19 der oberen, rechten beidseitig schwenkbaren Transportfläche 3 bzw. Wippe 3 eine Brückenfunktion/Rutschenfunktion zwischen der oberen, rechten beidseitig schwenkbaren Transportfläche 3 bzw. Wippe 3 und der unteren linken geneigten Transportfläche 21.

Anschließend wird das innere Rückhalteelement 19 der oberen, rechten beidseitig schwenkbaren Transportfläche 3 bzw. Wippe 3 wieder hochgeklappt.

Wird nun die Mittelleiste 24 der oberen, rechten beidseitig schwenkbaren Transportfläche 3 bzw. Wippe 3 nach unten weggefahren, verrutscht das äußere Stückgut 2, d.h. Gut 4, auf der der oberen, rechten beidseitig schwenkbaren Transportfläche 3 bzw. Wippe 3 von der äußeren in die innere Position, bis es dort am hochgeklappten inneren Rückhalteelement 19 der oberen, rechten beidseitig schwenkbaren Transportfläche 3 bzw. Wippe 3 zum Anschlag kommt.

Die Mittelleiste 24 der oberen, rechten beidseitig schwenkbaren Transportfläche 3 bzw. Wippe 3 wird wieder nach oben gefahren - und kann so das nun "innere" Stückgut 4 (Gut 4) (bei wieder gegengekippter Position der Wippe 3) gegen ein Zurückrutschen absichern.

Wie im unbeladenen Zustand des Transportelements 1 wird nun die obere rechte beidseitig schwenkbare Transportfläche 3 bzw. Wippe 3 wieder in horizontale oder leicht (ca. 10°) nach innen gekippte Position gekippt (vgl. FIG 2), in welcher ein weiteres "äußeres" Stückgut, d.h. ein neues Gut 4, - bei weggeklapptem äußeren Rückhalteelement 20 der oberen rechten beidseitig schwenkbare Transportfläche 3 bzw. Wippe 3 - auf die obere rechte beidseitig schwenkbare Transportfläche 3 bzw. Wippe 3 aufgeschoben wird bzw. (Hangabtriebskraft bedingt/Hangabtriebskraft unterstützt) bis zur hochgefahrenen Mittelleiste 24 auf die obere rechte beidseitig schwenkbare Transportfläche 3 bzw. Wippe 3 aufrutscht (Vermeidung von Aufrutschen).

Sodann wird das äußere Rückhalteelement 20 der oberen rechten beidseitig schwenkbare Transportfläche 3 bzw. Wippe 3 wieder nach oben geklappt.

Entsprechend diesem Umlagern des inneren (oberen rechten) Stückguts, d.h. Gut 3, von der oberen Ebene, rechts in die untere Ebene, links des Transportelements 1 und der "Neubeladung der oberen Ebene, rechts mit einem neuen äußeren (oberen rechten) Stückgut, d.h. neuem Gut 4, erfolgt das Umlagern des inneren (oberen linken) Stückguts, d.h. Gut 2, von der oberen Ebene, links in die untere Ebene, rechts des Transportelements 1 und der "Neubeladung der oberen Ebene, links mit einem neuen äußeren (oberen linken) Stückgut.

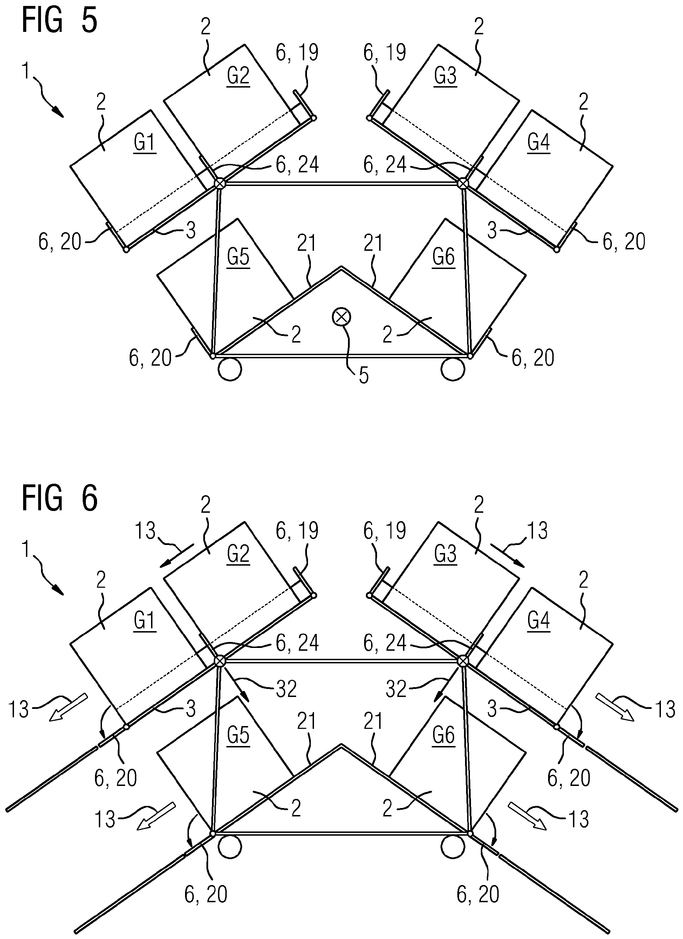

### - Transport (FIG 5)

FIG 5 zeigt das mit sechs Stückgütern 2, d.h. Gut 1 bis Gut 6, beladene Transportelement 1 während des Transports zu einer Ausschleusungs- bzw. Zielstelle (vgl. auch FIG 1).

Hierzu sind die zwei oberen beidseitig schwenkbaren Transportflächen 3 bzw. Wippen 3 nach außen gekippt, wobei die zwei oberen beidseitig schwenkbaren Transportflächen 3 bzw. Wippen 3 eine entsprechend der zwei unteren geneigten Transportflächen 21 parallele Winkellage (beispielsweise hier von 35°) einnehmen.

Die Stückgüter 2, d.h. Gut 1 bis Gut 6, liegen - Hangabtriebskraft bedingt/Hangabtriebskraft unterstützt - an ihren jeweiligen (hochgeklappten) äußeren Rückhalteelementen 20 bzw. (hochgefahrenen) Mittelleisten 24 an.

### - Ausschleusen/Entladen (FIG 6)

FIG 6 verdeutlicht das Entladen bzw. Ausschleusen von Stückgütern 2 von dem mit sechs Stückgütern 2, d.h. Gut 1 bis Gut 6, beladenen Transportelements 1 an einer Ausschleusungs- bzw. Zielstelle.

Erreicht das - sich bezüglich der zwei oberen beidseitig schwenkbaren Transportflächen/Wippen 3 und der zwei unteren geneigten Transportflächen 21 in der Transportstellung befindliche (vgl. FIG 5, obere Wippen 3 jeweils um ca. 35° nach außen gekippt, alle Klappen 6 bzw. äußere Rückhaltelemente 20, innere Rückhalteelemente 19 und Mittelleisten 24 in Rückhalteposition) - Transportelement 1 die Ziel-/Ausschleusungsstelle, werden, wie FIG 6 verdeutlicht, die äußeren Rückhalteelemente 20 an den zwei oberen beidseitig schwenkbaren Transportflächen/Wippen 3 und/oder den zwei unteren geneigten Transportflächen 21 (nach außen) weggeklappt.

Die vormals bzw. während des Transports durch die jeweiligen äußeren Rückhalteelemente 20/19 gegen ein Hangabtriebskraft bedingtes Abrutschen 13 (in Abrutschrichtung 13) - form- und kraftschlüssig - gesicherten Stückgüter 2 (Gut 1, Gut 4, Gut 5 und Gut 6) werden so freigegebenen und rutschen in Abrutschrichtung 13 relativ zum Transportelement 1 - Hangabtriebskraft bedingt/Hangabtriebskraft unterstützt - von den jeweiligen Transportflächen 3 und 21.

Sollen auch die - noch gegen die Mittelleisten 24 abgestützten, so gegen das Hangabtriebskraft bedingte Rutschen gesicherte - Stückgüter 2 (Gut 2 und Gut 3) auf den zwei oberen beidseitig schwenkbaren Transportflächen 3 bzw. Wippen 3 entladen/ausgeschleust werden, so werden auch die beiden Mittelleisten 24 nach unten "weggefahren" - und geben so die verbleibenden beiden Stückgüter (Gut 2 und Gut 3) frei. Auch diese rutschen so in Abrutschrichtung 13 relativ zum Transportelement 1 - Hangabtriebskraft bedingt/Hangabtriebskraft unterstützt - von den jeweiligen oberen beidseitig schwenkbaren Transportflächen 3 bzw. Wippen 3.

Um die Ausschleusungsgeschwindigkeit der "inneren" Stückgüter 2 auf den zwei oberen beidseitig schwenkbaren Transportflächen 3 bzw. Wippen 3 zu reduzieren und annähernd gleiche Ausschleusungsbedingungen für ein "inneres" und ein "äußeres Stückgut 2 auf einer oberen beidseitig schwenkbaren Transportfläche 3 bzw. Wippe 3 zu ermöglichen, können die äußeren Rückhalteelemente 20 an den zwei oberen beidseitig schwenkbaren Transportflächen/Wippen 3 zeitweilig wieder hochgeklappt werden und - nachdem die "inneren" Stückgüter 2 bis dahin abgerutscht sind diese wieder weggeklappt werden (Kaskaden artiges Ausschleusen).

Wirkt bei dem Transportelement 1 mit den zwei gekippten, oberen beidseitig schwenkbaren Transportflächen 3/Wippen 3 und den gegeneinander geneigten, unteren Transportflächen 21 so "ständig" bzw. "immerwährend" die Schwerkraft- bzw. gewichtskraftbedingte Hangabtriebskraft auf die dort angeordneten und durch die jeweiligen Klappen 6 bzw. äußeren Rückhaltelemente 20 und Mittelleisten 24 (gegen ein ungewolltes Abrutschen 13) gesicherten Stückgüter 2, d.h., die auf den zwei gekippten, oberen beidseitig schwenkbaren Transportflächen 3/Wippen 3 und den gegeneinander geneigten, unteren Transportflächen 21 angeordneten Stückgüter 2 sind "immer" für die Ausschleusung bereit bzw. "konditioniert", wird alleine durch das Umklappen und "nach unten" Wegfahren 32 einer Klappe 6 bzw. eines äußeren Rückhalteelements 20 und einer Mittelleiste 24 (an der Zielstelle) das jeweilige Stückgut freigegeben und rutscht sodann von der Transportfläche 3 ab.

Eine "separate", das Stückgut für das Abrutschen erst "konditionierende" Kippbewegung bei dem Transportelement 1 ist hier so dann nicht mehr notwendig.

### Weitere beispielhafte Transportelemente 1/"Doppelstockwägen"

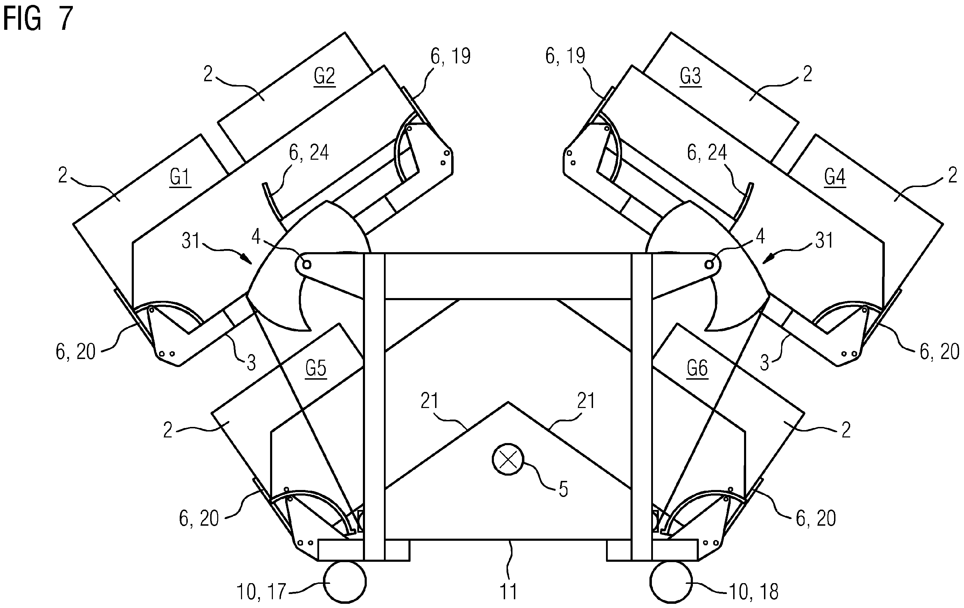

FIG 7, FIG 8 und FIG 9 zeigen jeweils ein weiteres (prinzipiell ansonsten weitgehend unverändert zu dem Transportelement 1 nach FIG 1 bis FIG 6 ("obere Wippfunktion" (mit ein oder zwei Wippen) und mit zwei unteren geneigten statischen Transportflächen) ausgebildetes Transportelement 1.

FIG 7 zeigt ein Transportelement 1 mit zwei oberen beidseitig schwenkbaren Transportflächen 3 bzw. Wippen 3 sowie zwei unteren geneigten Transportflächen 21.

Wie FIG 7 verdeutlicht weisen die zwei oberen beidseitig schwenkbaren Transportflächen 3 bzw. Wippen 3 jeweils eine besondere Kipp-/Schwenkmechanik auf, welche eine besondere Schwenk-/Kippkinematik 31 mit gesteuerter Klappenbewegung bei den zwei oberen beidseitig schwenkbaren Transportflächen 3 bzw. Wippen 3 bzw. bei den dortigen Klappen 6 (19, 20, 24) realisiert.

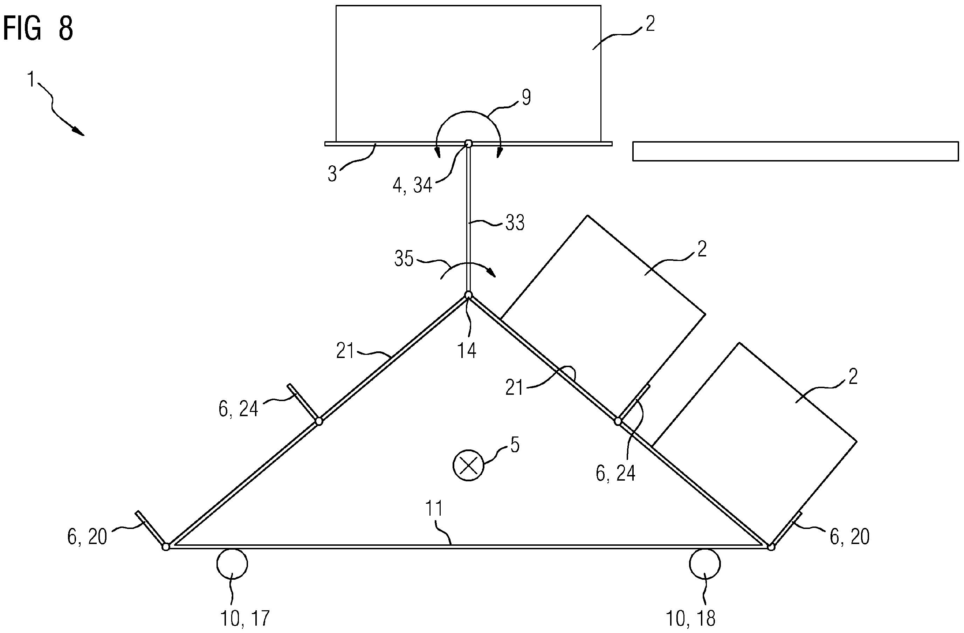

FIG 8 zeigt ein Transportelement 1 mit einer zentralen oberen beidseitig schwenkbaren Transportfläche 3 bzw. Wippe 3 sowie zwei unteren geneigten Transportflächen 21.

Wie FIG 8 verdeutlicht ist die zentrale obere beidseitig schwenkbare Transportfläche 3 bzw. Wippe 3 mittels einer Gestängestange 33 (zentral/mittig) oberhalb der zwei unteren geneigten Transportflächen 21 angeordnet.

Die Gestängestange 33 ist sowohl gelenkig/drehbar (Gelenk 34) mit der zentralen oberen beidseitig schwenkbaren Transportfläche 3 bzw. Wippe 3 als auch (Gelenk 35) an der gemeinsamen Kante 14 der zwei unteren geneigten Transportflächen 21 angelenkt.

Beide Freiheitsgrade können - beispielsweise mittels eines Riemens - zwangsgekoppelt sein.

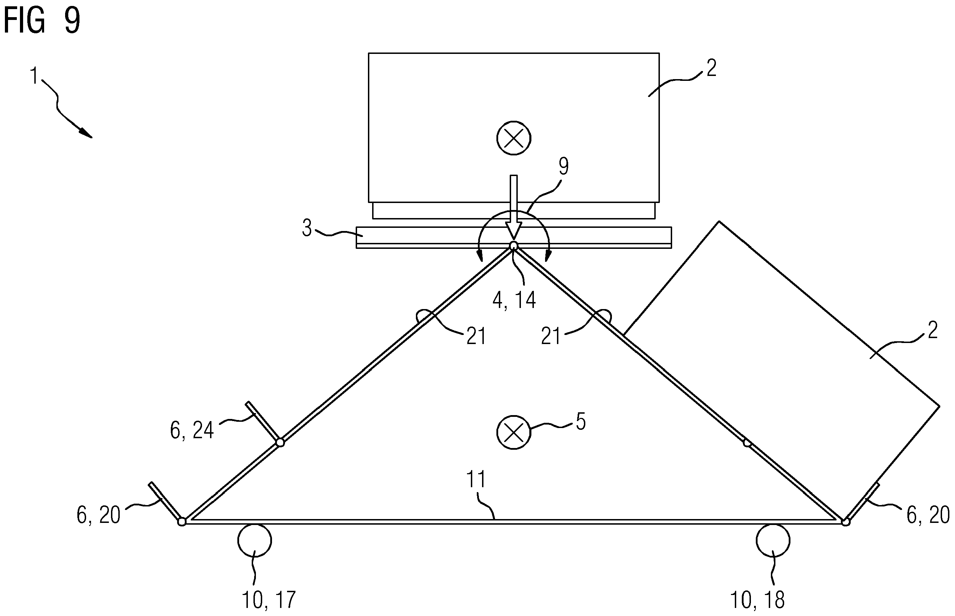

FIG 9 zeigt ein Transportelement 1 mit ebenfalls einer zentralen oberen beidseitig schwenkbaren Transportfläche 3 bzw. Wippe 3 sowie zwei unteren geneigten Transportflächen 21.

Wie FIG 9 verdeutlicht ist hier die zentrale obere beidseitig schwenkbare Transportfläche 3 bzw. Wippe 3 unmittelbar gelenkig/drehbar (Kippachse 4) an der gemeinsamen Kante 14 der zwei unteren geneigten Transportflächen 21 angelenkt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Transportelement (1) für einen Verteilförderer eines Sorters einer Sortieranlage eines Sortiersystems zum Sortieren von Stückgut (2)
- mit mindestens einer ersten, beidseitig um eine Achse (4) in einer Transportrichtung (5) des Transportelements (1) schwenkbaren Transportfläche (3) zur Aufnahme mindestens eines zu sortierenden Stückgutes (2), und
- mit mindestens einer zweiten, um eine Achse (22) in der Transportrichtung (5) des Transportelements (1) geneigten Transportfläche (21) zur Aufnahme mindestens eines zu sortierenden Stückgutes (2),
- wobei die mindestens eine erste, beidseitig schwenkbare Transportfläche (3) oberhalb (25) der mindestens einen zweiten, geneigten Transportfläche (21) angeordnet ist,
**dadurch gekennzeichnet, dass** die mindestens eine zweite, geneigte Transportfläche statisch auf einen vorgebaren Neigungswinkel eingestellt ist.

2. Transportelement (1) nach mindestens einem der voranstehenden Ansprüche,
**dadurch gekennzeichnet, dass**
die mindestens eine erste, beidseitig schwenkbare Transportfläche (3) durch Schwenkung (4) in eine Schwenkposition derart zu der mindestens einen zweiten, geschwenkten Transportfläche (21) positionierbar ist, dass ein zu transportierendes Stückgut (2) von der mindestens einen ersten, beidseitig schwenkbaren Transportfläche (3) zumindest unter Schwerkrafteinfluss an die mindestens eine zweite, geschwenkte Transportfläche (21) übergebbar (13) ist.

3. Transportelement (1) nach mindestens einem der voranstehenden Ansprüche,
**dadurch gekennzeichnet, dass**
die mindestens eine erste, beidseitig schwenkbare Transportfläche (3) mindestens eine Rückhaltevorrichtung (6, 19, 20, 24) aufweist, mittels welcher ein auf der mindestens einen ersten, beidseitig schwenkbaren Transportfläche (3) aufgenommenes, zu sortierendes Stückgut (2) gegen ein Abrutschen (13) auf der der mindestens einen ersten, beidseitig schwenkbaren Transportfläche (3) zurückhaltbar ist, wobei die mindestens eine Rückhaltevorrichtung (6) manipulierbar ist, um das auf der mindestens einen ersten, beidseitig schwenkbaren Transportfläche (3) aufgenommene, zu sortierende Stückgut (2) zu dem Abrutschen (13) auf der mindestens einen ersten, beidseitig schwenkbaren Transportfläche (3) freizugeben.

4. Transportelement (1) nach mindestens einem der voranstehenden Ansprüche,
**dadurch gekennzeichnet, dass**
die mindestens eine zweite, geneigte Transportfläche (21) mindestens eine Rückhaltevorrichtung (6, 20) aufweist, mittels welcher ein auf der mindestens einen zweiten, geneigten Transportfläche (21) aufgenommenes, zu sortierendes Stückgut (2) gegen ein Abrutschen (13) auf der mindestens einen zweiten, geneigten Transportfläche (21) zurückhaltbar ist, wobei die mindestens eine Rückhaltevorrichtung (6) manipulierbar ist, um das auf der mindestens einen zweiten, geneigten Transportfläche (21) aufgenommene, zu sortierende Stückgut (2) zu dem Abrutschen (13) auf der mindestens einen zweiten, geneigten Transportfläche (21) freizugeben.

5. Transportelement (1) nach mindestens einem der beiden voranstehenden Ansprüche,
**dadurch gekennzeichnet, dass**
die mindestens eine Rückhaltevorrichtung (6, 19, 20, 24) ein Rückhalteelement (6, 19, 20, 24), insbesondere eine an einem Ausschleuseort entriegelbare Klappe (6, 19, 20), ist oder dass die mindestens eine Rückhaltevorrichtung (6, 19, 20, 24) ein versenkbares Rückhalteelement (6, 24) ist und/oder dass die mindestens eine Rückhaltevorrichtung (6, 19, 20, 24) ein zumindest bereichsweise elastisches Rückhalteelement (6, 19, 20, 24) ist und/oder dass die mindestens eine Rückhaltevorrichtung (6, 19, 20, 24) ein sich über die gesamte Breite (7) der mindestens einen ersten, beidseitig schwenkbaren Transportfläche (3) und/oder der mindestens einen zweiten, geneigten Transportfläche (21) erstrecktes Rückhalteelement (6, 19, 20, 24) ist.

6. Transportelement (1) nach mindestens einem der voranstehenden Ansprüche,
**dadurch gekennzeichnet, dass**
die mindestens eine erste, beidseitig schwenkbare Transportfläche (3) und/oder die mindestens eine zweite, geneigte Transportfläche (21) zumindest bereichsweise eben oder als Freiformfläche ausgebildet ist/sind.

7. Transportelement (1) nach mindestens einem der voranstehenden Ansprüche,
**dadurch gekennzeichnet, dass**
die mindestens eine erste, beidseitig schwenkbare Transportfläche (3) eine für beide Schwenkrichtungen gemeinsame Schwenkachse (4) aufweist, welche insbesondere die mindestens eine erste, beidseitig schwenkbare Transportfläche (3) in zwei annähernd gleich große Teilflächen teilt.

8. Transportelement (1) nach mindestens einem der voranstehenden Ansprüche,
**gekennzeichnet** mit
einer Manipulationsvorrichtung (8), mittels welcher die mindestens eine erste, beidseitig schwenkbare Transportfläche (3) um die Achse (4) schwenkbar ist.

9. Transportelement (1) nach mindestens einem der voranstehenden Ansprüche,
**gekennzeichnet** mit
zwei von den ersten, beidseitig schwenkbaren Transportflächen (3), welche in der Transportrichtung (5) nebeneinander, insbesondere in etwa auf gleicher vertikaler Höhe (26), angeordnet sind, und/oder mit zwei von den zweiten, geneigten Transportflächen (21), welche jeweils um den gleichen Winkelbetrag (23) um die Achse (22) in der Transportrichtung (5) des Transportelements (1) gegeneinander geneigt sind.

10. Verteilförderer eines Sorters einer Sortieranlage eines Sortiersystems zum Sortieren von Stückgut (2) mit mehreren gelenkig miteinander, insbesondere über ein Zugmittel, insbesondere über eine Endloskette, verbundenen Transportelementen (1) jeweils nach mindestens einem der voranstehenden Ansprüche.

## Claims

1. Transport element (1) for a distributing conveyor of a sorter of a sorting installation of a sorting system for sorting articles (2)
- with at least one first transport surface (3) that can be pivoted on both sides about an axis (4) in a transport direction (5) of the transport element (1) for holding at least one article (2) to be sorted, and
- with at least one second transport surface (21) that is inclined about an axis (22) in a transport direction (5) of the transport element (1) for holding at least one article (2) to be sorted,
- wherein the at least one first transport surface (3) that can be pivoted on both sides is arranged above (25) the at least one second, inclined transport surface (21), **characterised in that**
the at least one second, inclined transport surface is set statically at a predefinable angle of inclination.

2. Transport element (1) according to at least one of the preceding claims,
**characterised in that**
the at least one first transport surface (3) that can be pivoted on both sides can be positioned by pivoting (4) to a pivot position in relation to the at least one second, inclined transport surface (21) such that an article (2) to be transported can be transferred (13) from the at least one first transport surface (3) that can be pivoted on both sides, at least subject to the influence of gravity, to the at least one second pivoted transport surface (21).

3. Transport element (1) according to at least one of the preceding claims,
**characterised in that**
the at least one first transport surface (3) that can be pivoted on both sides has at least one retaining apparatus (6, 19, 20, 24), by means of which an article (2) to be sorted that is held on the at least one transport surface (3) that can be pivoted on both sides can be retained to prevent it sliding down (13) on the at least one first transport surface (3) that can be pivoted on both sides, wherein the at least one retaining apparatus (6) is able to be manipulated in order to release the article (2) to be sorted that is held on the at least one first transport surface (3) that can be pivoted on both sides to slide down (13) on the at least one first transport surface (3) that can be pivoted on both sides.

4. Transport element (1) according to at least one of the preceding claims,
**characterised in that**
the at least one second, inclined transport surface (21) has at least one retaining apparatus (6, 20), by means of which an article (2) to be sorted that is held on the at least one second, inclined transport surface (21) can be retained to prevent it sliding down (13) on the at least one second, inclined transport surface (21), wherein the at least one retaining apparatus (6) is able to be manipulated in order to release the article (2) to be sorted that is held on the at least one second, inclined transport surface (21) to slide down (13) on the at least one second, inclined transport surface (21).

5. Transport element (1) according to at least one of the two preceding claims,
**characterised in that**
the at least one retaining apparatus (6, 19, 20, 24) is a retaining element (6, 19, 20, 24), in particular a flap (6, 19, 20) that can be unlocked at an outward feed point, or the at least one retaining apparatus (6, 19, 20, 24) is a lowerable retaining element (6, 24) and/or the at least one retaining apparatus (6, 19, 20, 24) is an at least partially elastic retaining element (6, 19, 20, 24) and/or the at least one retaining apparatus (6, 19, 20, 24) is a retaining element (6, 19, 20, 24) extending over the entire width (7) of the at least one first transport surface (3) that can be pivoted on both sides and/or the at least one second, inclined transport surface (21).

6. Transport element (1) according to at least one of the preceding claims,
**characterised in that**
the at least one first transport surface (3) that can be pivoted on both sides and/or the at least one second, inclined transport surface (21) is/are configured at least partially as flat or as a free-form surface.

7. Transport element (1) according to at least one of the preceding claims,
**characterised in that**
the at least one first transport surface (3) that can be pivoted on both sides has a common pivot axis (4) for both pivot directions, which divides in particular the at least one first transport surface (3) that can be pivoted on both sides into two sub-surfaces of approximately equal size.

8. Transport element (1) according to at least one of the preceding claims,
**characterised by**
a manipulation apparatus (8), by means of which the at least one first transport surface (3) that can be pivoted on both sides can be pivoted about the axis (4).

9. Transport element (1) according to at least one of the preceding claims,
**characterised by**
two of the first transport surfaces (3) that can be pivoted on both sides, which are arranged next to one another in the transport direction (5), in particular at roughly the same vertical height (26), and/or two of the second, inclined transport surfaces (21), which are each inclined counter to one another by the same angle size (23) about the axis (22) in the transport direction (5) of the transport element (1).

10. Distributing conveyor of a sorter of a sorting installation of a sorting system for sorting articles (2) with a number of transport elements (1) connected to one another in an articulated manner, in particular by way of a traction means, in particular by way of an endless chain, each according to one of the preceding claims.

## Revendications

1. Élément de transport (1) pour convoyeur distributeur d'une trieuse d'une installation de tri pour le tri de colis de détail (2)
- doté d'au moins une surface de transport (3) pivotant des deux côtés autour d'un axe (4) dans une direction de transport (5) de l'élément de transport (1) pour la prise d'au moins un colis de détail à trier (2), et
- doté d'au moins une deuxième surface de transport (21) inclinée autour d'un axe (22) dans la direction de transport (5) de l'élément de transport (1) pour la prise d'au moins un colis de détail (2) à trier,
- la au moins une première surface de transport (3) pivotant des deux côtés étant agencée au-dessus (25) de la au moins une deuxième surface de transport (21) inclinée,
**caractérisé en ce que**
la au moins une deuxième surface de transport inclinée est ajustée statiquement sur un angle d'inclinaison prédéterminable.

2. Élément de transport (1) selon au moins l'une des revendications précédentes,
**caractérisé en ce que** la au moins une première surface de transport (3) pivotant des deux côtés peut être positionnée par pivotement (4) dans une position de pivotement de telle manière par rapport à la au moins une deuxième surface de transport (21) pivotée, qu'un colis de détail (2) à transporter par la au moins une première surface de transport (3) pivotant des deux côtés peut être transféré (13) à tout le moins par gravité sur la au moins une deuxième surface de transport (21) pivotée.

3. Élément de transport (1) selon au moins l'une des revendications précédentes,
**caractérisé en ce que** la au moins une première surface de transport (3) pivotant des deux côtés présente au moins un dispositif de retenue (6, 19, 20, 24) au moyen duquel un colis de détail (2) à trier placé sur la au moins une première surface de transport (3) pivotant des deux côtés, peut être retenu contre un glissement (13) sur la au moins une première surface de transport (3) pivotant des deux côtés, le au moins un dispositif de retenue (6) pouvant être manipulé pour libérer le colis de détail (2) à trier posé sur la au moins une première surface de transport (3) pivotant des deux côtés à glissement (13) sur la au moins une première surface de transport (3) pivotant des deux côtés.

4. Élément de transport (1) selon au moins l'une des revendications précédentes,
**caractérisé en ce que** la au moins une deuxième surface de transport (21) inclinée présente au moins un dispositif de retenue (6, 20) au moyen duquel un colis de détail (2) à trier posé sur la au moins une deuxième surface de transport (21) inclinée, peut être retenu sur la au moins une deuxième surface de transport (21) inclinée contre un glissement (13), le au moins un dispositif de retenue (6) pouvant être manipulé pour libérer le colis de détail à trier posé sur la au moins une deuxième surface de transport (21) inclinée à glissement (13) sur la au moins une deuxième surface de transport inclinée.

5. Élément de transport (1) selon au moins l'une des deux revendications précédentes,
**caractérisé en ce que** le au moins un dispositif de retenue (6, 19, 20, 24) est un élément de retenue (6, 19, 20, 24), en particulier un clapet (6, 19, 20) déblocable sur un point d'évacuation, ou **en ce que** le au moins un dispositif de retenue (6, 19, 20, 24) est un élément de retenue (6, 24) escamotable et/ou **en ce que** le au moins un dispositif de retenue (6, 19, 20, 24) est un élément de retenue (6, 19, 20, 24) élastique sur au moins une partie et/ou **en ce que** le au moins un dispositif de retenue (6, 19, 20, 24) est un élément de retenue (6, 19, 20, 24) qui s'étend sur la largeur totale (7) de la au moins une première surface de transport (3) pivotant des deux côtés et/ou de la au moins une deuxième surface de transport (21) inclinée.

6. Élément de transport (1) selon au moins l'une des revendications précédentes,
**caractérisé en ce que** la au moins une première surface de transport (3) pivotant des deux côtés et/ou la au moins une deuxième surface de transport (21) inclinée est/sont configuré/es au moins partiellement plate/s ou d'une quelconque forme superficielle.

7. Élément de transport (1) selon au moins l'une des revendications précédentes,
**caractérisé en ce que** la au moins une première surface de transport (3) pivotant des deux côtés présente un axe de pivotement (4) commun pour les deux sens de pivotement, laquelle divise en particulier la au moins une première surface de transport (3) pivotant des deux côtés en deux surfaces de dimensions presque identiques.

8. Élément de transport (1) selon au moins l'une des revendications précédentes,
**caractérisée par**
un dispositif de manipulation (8) au moyen duquel la au moins une première surface de transport pivotant des deux côtés (3) peut pivoter autour de l'axe (4).

9. Élément de transport (1) selon au moins l'une des revendications précédentes,
**caractérisée par**
deux des premières surfaces de transport (3) pouvant pivoter des deux côtés, lesquelles sont agencées dans la direction de transport (5) l'une à côté de l'autre, en particulier à environ hauteur verticale égale (26), et/ou par deux des deuxièmes surfaces de transport (21) inclinées, lesquelles sont inclinées l'une contre l'autre chaque fois à la même amplitude angulaire (23) autour de l'axe (22) dans la direction de transport (5) de l'élément de transport (1).

10. Convoyeur distributeur d'une trieuse d'une installation de tri pour le tri de colis de détail (2) doté de plusieurs éléments de transport (1) raccordés à pivotement l'un avec l'autre, en particulier par un moyen de traction, en particulier par une chaîne sans fin, chaque fois selon au moins l'une des revendications précédentes.
